(19)

Europäisches Patentamt
European Patent Office
Office européen des brevets

(11) **EP 3 007 299 B1**

(12) **EUROPEAN PATENT SPECIFICATION**

(45) Date of publication and mention of the grant of the patent:
**01.02.2017 Bulletin 2017/05**

(21) Application number: **15188920.1**

(22) Date of filing: **08.10.2015**

(51) Int Cl.:
*H02J 3/32* (2006.01)      *H02J 3/38* (2006.01)
*G05B 13/00* (2006.01)      *G05B 13/04* (2006.01)
*H02S 10/00* (2014.01)      *H02J 3/00* (2006.01)
*H02J 3/14* (2006.01)

(54) **DEMAND ADJUSTMENT PLAN GENERATION APPARATUS, METHOD, AND PROGRAM**

VORRICHTUNG ZUR ERZEUGUNG EINES NACHFRAGEANPASSUNGSPLANS, VERFAHREN UND PROGRAMM

APPAREIL, PROCÉDÉ ET PROGRAMME DE GÉNÉRATION D'UN PLAN D'AJUSTEMENT DE DEMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.10.2014 JP 2014208979**

(43) Date of publication of application:
**13.04.2016 Bulletin 2016/15**

(73) Proprietor: **FUJITSU LIMITED**
**Kawasaki-shi,**
**Kanagawa 211-8588 (JP)**

(72) Inventors:
• **TANIGUCHI, Tsuyoshi**
  **Kawasaki-shi, Kanagawa 211-8588 (JP)**
• **NAKAO, Yoshio**
  **Kawasaki-shi, Kanagawa 211-8588 (JP)**

(74) Representative: **Schultes, Stephan**
**Haseltine Lake LLP**
**300 High Holborn**
**London WC1V 7JH (GB)**

(56) References cited:
EP-A1- 2 226 754        EP-A1- 2 775 430
WO-A1-2013/136419        JP-A- 2009 077 498
US-A1- 2010 292 856

**Description**

TECHNICAL FIELD

The present invention relates to a demand adjustment plan generation apparatus, a method, and a program.

BACKGROUND ART

Photovoltaic power generation has attracted attention as a clean energy source. For example, when photovoltaic power generation can be effectively utilized and peak-shaving can be realized, it can be expected to achieve the reduction of contract power, the cutting of the scale of the facilities of an electric power company, etc.

The photovoltaic power generation, however, is susceptible to the influence of weather, so that the output of the photovoltaic power generation is unstable. Therefore, various ideas are necessary to be devised in order to effectively utilize the photovoltaic power generation. For example, in order to effectively realize the peak-shaving by using the photovoltaic power generation, different types of distributed power supplies such as a rechargeable battery and a fuel battery are operated, or power demand is adjusted (see, for example, "High-performance photovoltaic generation system having peak-shaving function of receive power with parallel establishment of storage cell").

In this regard, references are made to Japanese Laid-open Patent Publication No.2010-204833, Japanese Laid-open Patent Publication No.2008-43147, Japanese Laid-open Patent Publication No.2008-141918, Japanese Laid-open Patent Publication No.2010-41802, and Japanese Laid-open Patent Publication No.2001-327080.

Further, reference is made to Noriaki TOKUDA, Makoto RYOJI, and Yoshiaki KOHASHI, "High-performance photovoltaic generation system having peak-shaving function of receive power with parallel establishment of storage cell", Working plan of Building (697), p37-41, 2008.

WO2013/136419 and US2014/358307 disclose an operation plan creating system. The system, by simulation based on a supply and demand scenario, extracts for each time point during operation for one day, a scenario that raises the effect of correction of the operation at the time point. The operation plan creating system classifies action-requiring scenarios by action similarity. The operation plan creating system determines an action-requiring scenario group for which actions are similar, and a correction time. The operation plan creating system judges whether an early action scenario group can be identified by data available at an early action time on the current day. If identifiable, the operation plan creating system creates an identification condition for the early action scenario group and an optimal operation plan for the scenarios satisfying the identification condition.

EP2226754 discloses an energy management system, which has the DSM function of controlling energy loads. The system has a database and a load adjustment range prediction unit. The unit redirects a load adjustment range by using the history data stored in the database and outputs the load adjustment range thus predicted.

JP2009077498 discloses a load reduction plan decision system provided with a demand predicting means predicting power demand of an electric power receiver and a demand predicting means predicting demand being electric energy which needs to receive supply from an electricity company. The system is also provided with a plan decision means deciding a load reduction plan being an order plan of load reduction among a plurality of loads. The system has a load reduction classification index specifying a load reduction order under a different weather condition and a weather predicting means predicting weather of a plan day. The load reduction plan is decided based on predicted weather of the plan day and the load reduction classification index.

EP2775430 discloses an electricity demand regulating system which estimates a load amount of an individual equipment whose measurement information cannot be acquired and improves estimation accuracy of an electricity demand amount in a power system. The electricity demand regulating system for managing electric energy used by a consumer according to an operation state of the power system includes a storage part to store measurement information of a consumer equipment, and a generation part to generate a load pattern indicating a load amount tendency from the measurement information of the equipment stored in the storage part. A load amount of an equipment whose measurement information is not stored in the storage part is estimated from the load pattern generated by the generation part, and an electricity demand amount of the consumer is obtained based on the measurement information and the estimated load amount.

US2010/292856 discloses a method for managing electrical demand on a power grid in response to electrical supply conditions. The method includes determining a first energy demand forecast using stored information, determining a first energy supply forecast based on a known energy production and transmission capacity, and comparing the first energy demand forecast to the first energy supply forecast. The method also includes transmitting at least one of an adjusted price signal and an electrical load shedding signal to a customer over a bidirectional communication system based on the comparison of the first energy demand forecast to the first energy supply forecast.

## SUMMARY OF THE INVENTION

According to an aspect of the present invention, there is provided a demand adjustment plan generation apparatus according to claim 1.

According to another aspect of the present invention, there is provided a method for generating a demand adjustment plan according to claim 2.

According to another aspect of the present invention, there is provided a program according to claim 3.

## BRIEF DESCRIPTION OF DRAWINGS

FIG. 1 illustrates an example configuration of a demand adjustment system according to an embodiment;

FIG. 2 illustrates an example hardware configuration of a demand adjustment apparatus according to an embodiment;

FIG. 3 illustrates an example functional configuration of the demand adjustment apparatus according to an embodiment;

FIG. 4 illustrates an example configuration of a demand adjustment planning section;

FIG. 5 is an example flowchart of a procedure executed by the demand adjustment apparatus;

FIG. 6 is an example flowchart of a procedure of an operation plan generation process executed by a necessary charge amount calculation section and a demand adjustable amount calculation section;

FIG. 7 illustrates an example of calculating a peak-shaving discharge amount and a necessary charge amount based on a supply and demand scenario;

FIG. 8 illustrates a calculation example of the necessary charge amount under consideration of all supply and demand scenarios;

FIG. 9 is an example flowchart of a calculation process of a demand adjustable amount;

FIG. 10 is an example of histograms in a certain period relative to the peak-shaving discharge amount for each of the supply and demand scenarios;

FIG. 11 illustrates an example configuration of a supply and demand adjustment policy;

FIG. 12 illustrates an example calculation method of the demand adjustable amount;

FIG. 13A is an example graph illustrating the demand adjustment amounts of the time periods corresponding to the load apparatus group whose apparatus group ID is "1";

FIG. 13B is an example graph illustrating the demand adjustment amounts of the time periods corresponding to the load apparatus group whose apparatus group ID is "2"

FIG. 14A illustrates an example of restriction data;

FIG. 14B illustrates another example of the restriction data;

FIG. 15A illustrates an example where the restriction data is applied to a graph of FIG. 13A;

FIG. 15B illustrates an example where the restriction data is applied to a graph of FIG. 13B;

FIG. 16 is an example flowchart of a procedure executed by a demand adjustment condition calculation section in the operation plan generation process;

FIG. 17 illustrates example parameters used by the demand adjustment condition calculation section;

FIG. 18 illustrates an example calculation method of a demand adjustment target period;

FIG. 19 is an example flowchart of a procedure of the operation plan generation process executed by an operation plan generation section;

FIG. 20A illustrates an example of a demand adjustment plan acquired with respect to a demand adjustment target period;

FIG. 20B illustrates another example of the demand adjustment plan acquired with respect to another demand adjustment target period;

FIG. 21A illustrates an example operation plan;

FIG. 21B illustrates another example operation plan;

FIG. 22 is an example flowchart of a procedure of a load apparatus control process; and

FIG. 23 illustrates an example where an external apparatus has the necessary charge amount calculation section and the demand adjustable amount calculation section.

## BEST MODE FOR CARRYING OUT THE INVENTION

In related technologies, for example, in the technique as described in "High-performance photovoltaic generation system having peak-shaving function of receive power with parallel establishment of storage cell", as soon as the charge amount is insufficient and the output of photovoltaic power generation is lowered, load cut-off is forcibly exercised (instructed). This means that the load cut-off which is inconvenient for a user is likely to occur. For example, the load cut-off is sequentially executed in the increasing order of the priority levels. For example, in a case where only loads having higher priority levels are operated, when both the insufficient charge amount and the output reduction of the photovoltaic power generation occur at the same time by chance, as a result, the power supply to the load having a higher priority is cut off.

To prevent such an inconvenience, if the load cut-off to the loads having lower priorities is done without any careful consideration so as to reduce the possibility of the occurrence of the insufficient charge amount, as a result, it's going to be more likely that unnecessary load cut-off is done. In contrast, if the execution of the load cut-off is controlled, it's going to be more likely that the load having a higher priority is cut-off due to insufficient charge amount.

According to an embodiment of the present invention, it becomes possible to alleviate the inconvenience experienced by a user in adjustment of power demand.

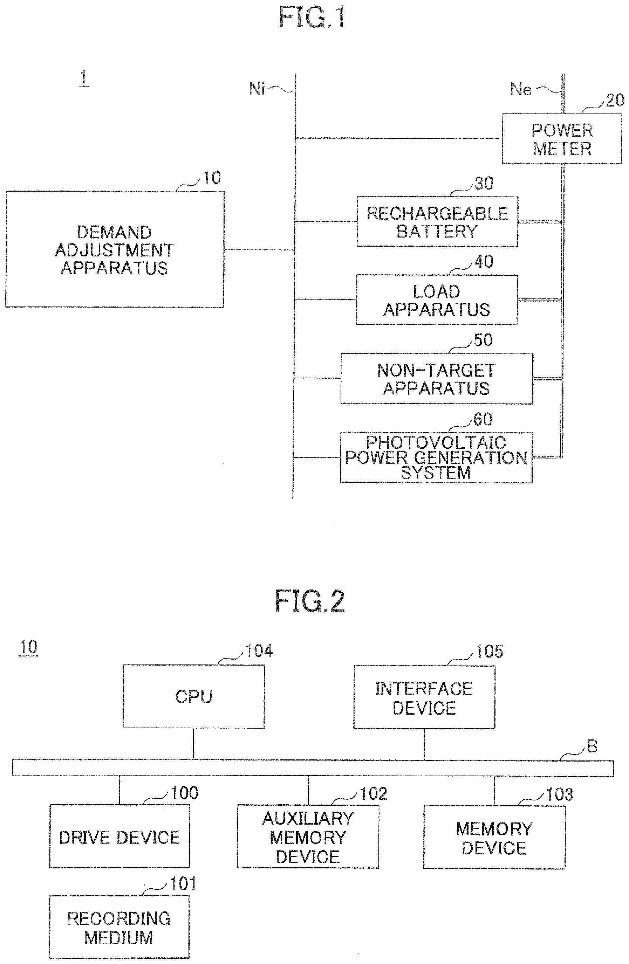

In the following, embodiments of the present invention are described with reference to the accompanying drawings. FIG. 1 illustrates an example configuration of a demand adjustment system 1 according to an embodiment. In the demand adjustment system 1 of FIG. 1, a demand adjustment apparatus 10 is connected to and in communication with a power meter 20, a rechargeable battery 30, a load apparatus 40, a non-target apparatus 50, a photovoltaic power generation system 60, etc., via a network Ni. Further, the power meter 20, the rechargeable battery 30, the load apparatus 40, the non-target apparatus 50, and the photovoltaic power generation system 60 are connected to each other via a power network Ne.

The power meter 20 is an apparatus which measures the power value of the power externally received via the power network Ne (hereinafter referred to as "received power value"). For example, the power meter 20 measures the received power value from an electric power company.

The load apparatus 40 and the non-target apparatus 50 are apparatuses which have the received power; the rechargeable battery 30 and the photovoltaic power generation system 60 are the supply sources of power. That is, the load apparatus 40 and the non-target apparatus 50 consume the received power, namely the power discharged from the rechargeable battery 30, and the power generated by the photovoltaic power generation system 60. The load apparatus 40 is an apparatus which is to be controlled by the demand adjustment apparatus 10 with respect to the power demand adjustment. For example, the load apparatus 40 is an apparatus to control tuning on/off a lighting device, and an apparatus to control the power of air-conditioning. The non-target apparatus 50 is an apparatus which is not to be controlled with respect to the power demand adjustment by the demand adjustment apparatus 10. The term "power demand adjustment" specifically refers to reducing the power demand or reducing the power supply to the load apparatus 40.

The photovoltaic power generation system 60 is a generation system which generates power using sunlight. The rechargeable battery 30 is a battery which, when the received power value exceeds a peak-shaving target value, realizes peak-shaving by discharging power which corresponds to the excessive value. For example, the charging of the rechargeable battery 30 is performed by using nighttime power. Note that the received power value substantially corresponds to the calculation result obtained by subtracting power generated by the photovoltaic power generation system 60 from the power demand (consumption power, energy consumption) by the load apparatus 40 and the non-target apparatus 50.

The demand adjustment apparatus 10 refers to one or more computers which control the rechargeable battery 30, the load apparatus 40, etc., via the network Ni to realize the peak-shaving. For example, when the operations of the demand adjustment system 1 start, the peak-shaving target value is set in the demand adjustment apparatus 10. The "peak-shaving target value" refers to a threshold value relative to the received power value. The demand adjustment apparatus 10 monitors the received power value which is measured by the power meter 20, and performs discharging from the rechargeable battery 30 so that the received power value is maintained to be less than the peak-saving target value. The demand adjustment apparatus 10 performs demand adjustment when it is expected that the received power value cannot be maintained to be less than the peak-shaving target value due to insufficient charge amount.

FIG. 2 illustrates an example hardware configuration of the demand adjustment apparatus 10 according to an embodiment. The demand adjustment apparatus 10 of FIG. 2 includes a drive device 100, an auxiliary memory device 102, a memory device 103, a Central Processing Unit (CPU) 104, an interface device 105, etc.

A program to realize the process performed by the demand adjustment apparatus 10 is provided by using a recording medium 101. When the recording medium 101 which stores the program therein is set in the drive device 100, the program is installed in the auxiliary memory device 102 from the recording medium 101 via the drive device 100. Note that, however, the installation of the program is not necessarily performed from the recording medium 101. For example, the program may be downloaded from another computer via a network. The auxiliary memory device 102 stores not only the installed program but also necessary files and data.

Upon the instructions to start up the program, the memory device 103 reads the program from the auxiliary memory device 102 and stores the program therein. The CPU 104 executes functions related to the demand adjustment apparatus 10 based on the program stored in the memory device 103. The interface device 105 is used as an interface to connect the demand adjustment apparatus 10 to a network.

For example, the recording medium 101 includes a Compact Disc Read-Only Memory (CD-ROM), a Digital Versatile Disc (DVD), and a Universal Serial Bus (USB) memory. Further, for example, the auxiliary memory device 102 includes a Hard Disk Drive (HDD) and a flash memory. The recording medium 101 and the auxiliary memory device 102 correspond to a computer-readable recording medium.

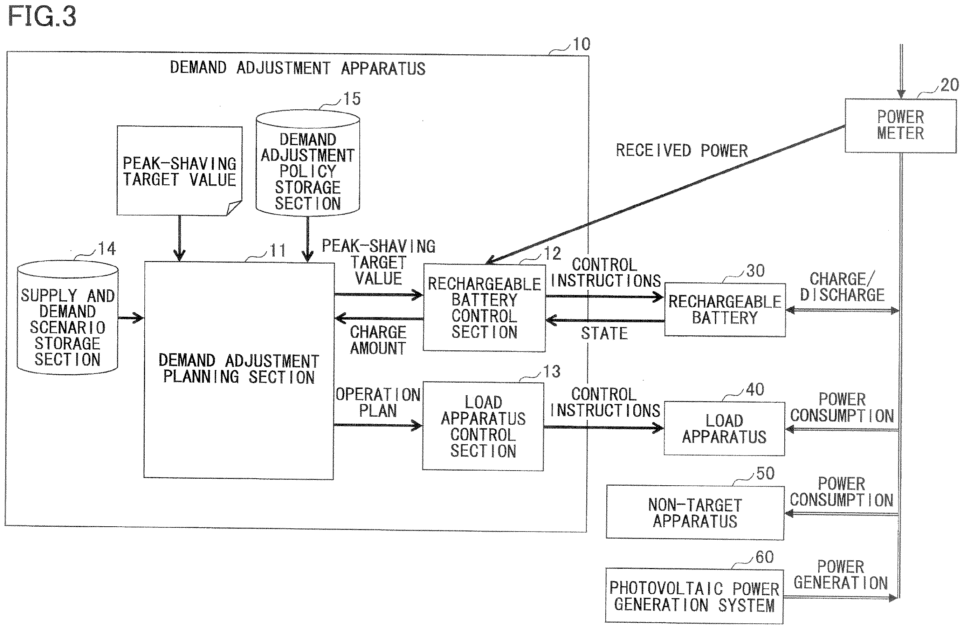

FIG. 3 illustrates an example functional configuration of the demand adjustment apparatus 10 according to an embodiment. In FIG. 3, the demand adjustment apparatus 10 includes a demand adjustment planning section 11, a rechargeable battery control section 12, a load apparatus control section 13, etc. Those elements are realized by a process executed by the CPU 104 caused by one or more programs stored in the demand adjustment apparatus 10. The demand adjustment apparatus 10 uses a supply and demand scenario storage section 14, a demand adjustment policy storage section 15, etc. For example, those storage sections can be realized by a storage device which is connected to the auxiliary memory device 102 or the demand adjustment apparatus 10 via a network.

The rechargeable battery control section 12 controls the rechargeable battery 30. For example, the rechargeable battery control section 12 instructs the rechargeable battery 30 via the network Ni to discharge power which corresponds to the difference: (received power value)-(peak-shaving target value). Further, the rechargeable battery control section 12 acquires a remaining charge amount of the rechargeable battery 30 (hereinafter referred to as "charged power amount") from the rechargeable battery 30 via the network Ni. The charged power amount is reported to the demand adjustment planning section 11.

The demand adjustment planning section 11 generates an operation plan of the load apparatus 40 to adjust the power demand by the load apparatus 40. For example, the demand adjustment planning section 11 generates the operation plan to perform the demand adjustment when it is expected that the received power value cannot be maintained to be less than the peak-shaving target value. In the generation of the operation plan, the peak-shaving target value, the supply and demand scenario, a demand adjustment policy, etc., are used.

The "supply and demand scenario" refers to the data which include a combination of a demand scenario and a power generation scenario. The "demand scenario" refers to the time series data which indicates the transition of the power demand for a certain period (e.g., one day). The "power generation scenario" refers to the time series data which indicates the transition of the generated power by the photovoltaic power generation system 60 for a certain period (e.g., one day). The supply and demand scenario storage section 14 stores a number of supply and demand scenarios whose "demand scenario" and "power generation scenario" differ from each other.

The "demand adjustment policy" refers to the data indicating the policy of the demand adjustment. For example, the demand adjustment policy includes the upper limit of an adjustment amount of demand. The demand adjustment policy is stored in the demand adjustment policy storage section 15.

The load apparatus control section 13 controls the load apparatus 40 based on the operation plan generated by the demand adjustment planning section 11. For example, the load apparatus control section 13 switches the operation mode of the load apparatus 40 to reduce the consumption power of the load apparatus 40.

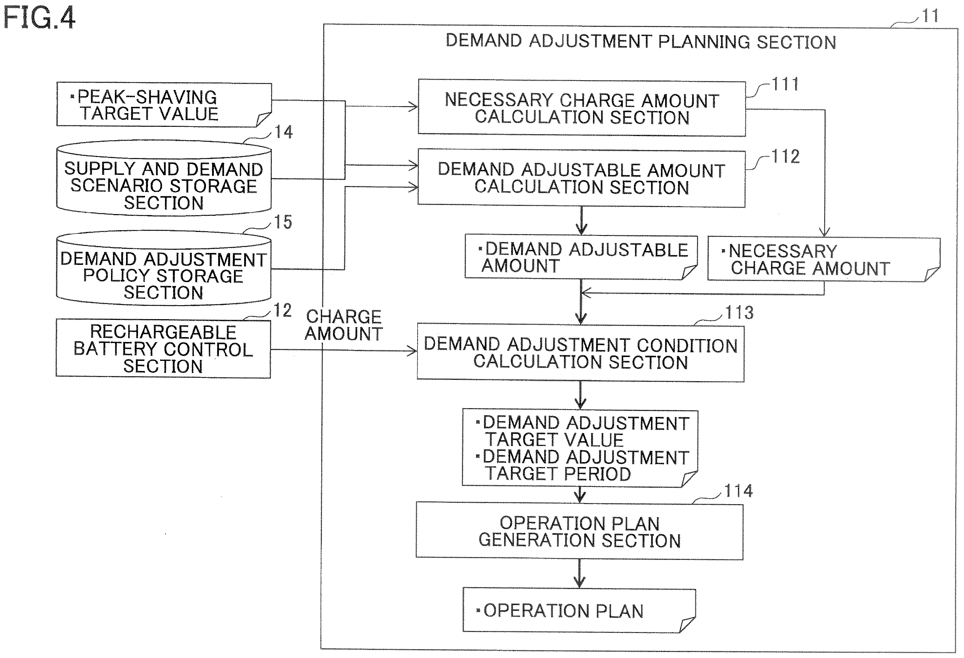

Details of the demand adjustment planning section 11 are described. FIG. 4 illustrates an example configuration of the demand adjustment planning section 11. The demand adjustment planning section 11 of FIG. 4 includes a necessary charge amount calculation section 111, a demand adjustable amount calculation section 112, a demand adjustment condition calculation section 113, an operation plan generation section 114, etc.

Based on the peak-shaving target value, the supply and demand scenario, etc., the necessary charge amount calculation section 111 calculates a charge amount which is necessary to attain the peak-shaving target value for each of the time periods which are determined by dividing a certain period such as one day (hereinafter referred to as "necessary change amount"). The term "to attain the peak-shaving target value" refers to controlling the received power value to be less than or equal to the peak-shaving target value.

Based on the peak-shaving target value, the supply and demand scenario, the demand adjustment policy, etc., the demand adjustable amount calculation section 112 calculates the upper-limit evaluation value of the adjustable range of the power demand by the load apparatus 40 (hereinafter referred to as "demand adjustable amount"). The adjustment of the power demand by the load apparatus 40 is performed to reduce the discharge amount of the power from the rechargeable battery 30 for peak-shaving. That is, the demand adjustment of the load apparatus 40 is performed to prevent the occurrence of the insufficient charge amount.

The demand adjustment condition calculation section 113 periodically compares the charge amount which is acquired via the rechargeable battery control section 12 at the moment with the necessary change amount relative to the time period including the moment. When the charge amount is less than the necessary charge amount, the demand adjustment condition calculation section 113 calculates a total amount of the power amount which is to be compensated for by the demand adjustment (hereinafter referred to as a "demand adjustment target value"), and further calculates a time period which corresponds to the target of the demand adjustment (hereinafter referred to as a "demand adjustment target period").

Based on the demand adjustment target value and the demand adjustable amount, the operation plan generation section 114 generates an operation plan to compensate for the insufficient charge amount by performing the demand adjustment on the load apparatus 40 so as to reduce the inconvenience experienced by an operation user of the load apparatus 40 (a user of the load apparatus 40).

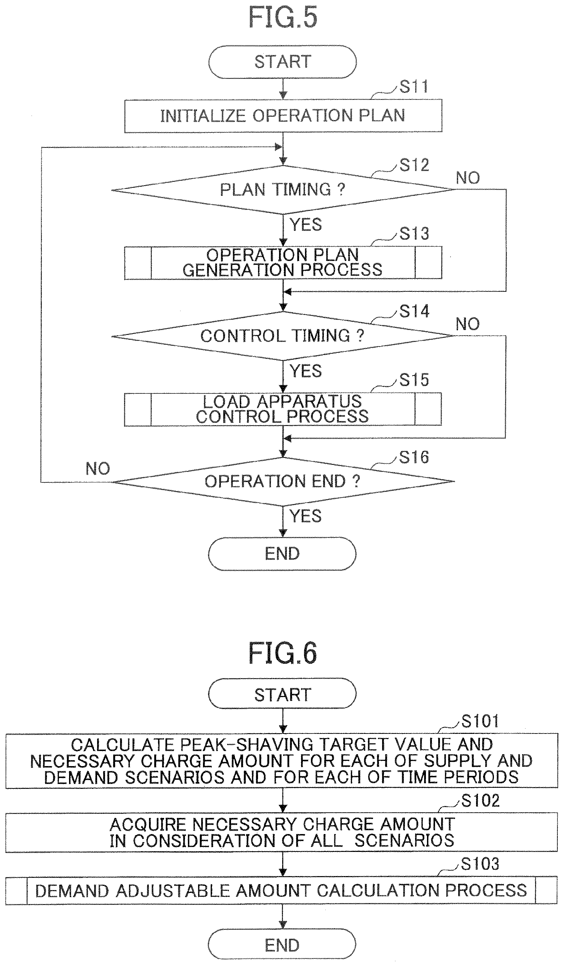

In the following, an example procedure of the process performed by the demand adjustment apparatus 10 is described. FIG. 5 is an example flowchart of a procedure of the process performed by the demand adjustment apparatus 10. For example, the process of FIG. 5 relates to an operation of one day.

For example, when a one-day operation of the demand adjustment system 1 starts, the demand adjustment planning section 11 initializes an operation plan of the load apparatus 40 (step S11). As a result of the initialization of the operation plan, for example, the operation plan is generated in which, for example, zero is set to the data indicating the operation state in a normal state of the apparatus for each of the time periods (planned value) and zero is also set to the data indicating the adjustment amount of the demand adjustment.

Next, when it is time to review the operation plan (every thirty minutes in this embodiment) (YES in step S12), the demand adjustment planning section 11 executes an operation plan generation process (step S13). In the operation plan generation process, when the charge amount at the moment is less than the necessary charge amount, the operation plan is generated to execute the demand adjustment.

Next, when it is time to control the load apparatus 40 (control timing) (every thirty minutes in this embodiment) (YES in step S14), the load apparatus control section 13 performs a control process on the load apparatus 40 based on the operation plan (step S15). The process after the step S12 is periodically executed until the time to terminate the operation (step S16).

Next, details of the process in step S13 are described. FIG. 6 is an example flowchart of the procedure of the process executed by the necessary charge amount calculation section 111 and the demand adjustable amount calculation section 112 in the operation plan generation process.

In step S101, the necessary charge amount calculation section 111 calculates a peak-shaving discharge amount and a necessary charge amount for each of the supply and demand scenarios stored in the supply and demand scenario storage section 14. The "peak-shaving discharge amount" is the discharge amount from the rechargeable battery 30 for the peak-shaving.

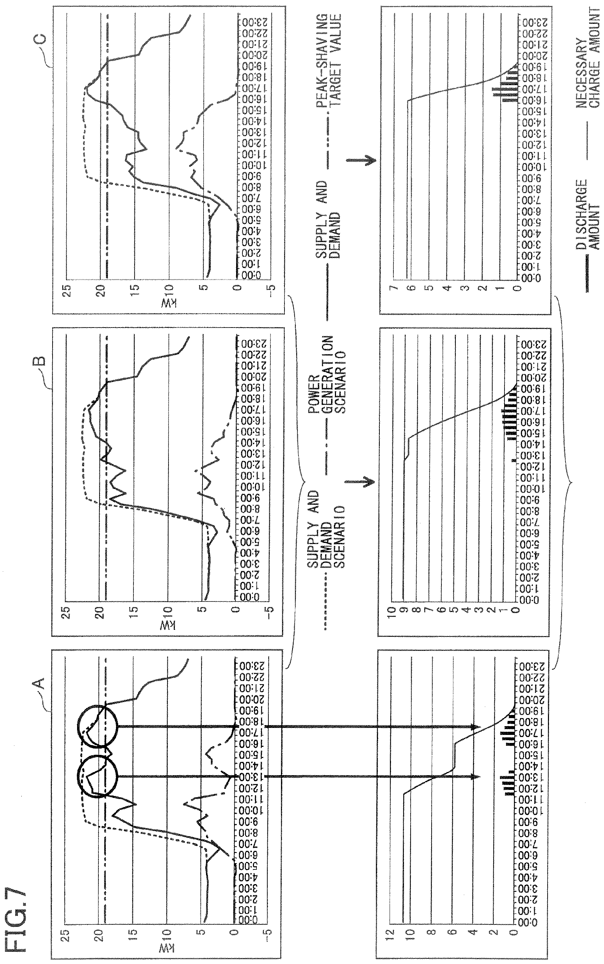

FIG. 7 illustrates the calculation examples of the peak-shaving discharge amount and the necessary charge amount based on the respective supply and demand scenarios. In FIG. 7, three supply and demand scenarios are indicated in an upper part, and the peak-shaving discharge amounts and the necessary charge amounts based on the respective supply and demand scenarios are indicated in a lower part.

The supply and demand scenarios include respective demand scenarios and power generation scenarios of 24 hours. The demand scenarios are indicated by dotted lines and the power generation scenarios are indicated by dashed-dotted lines.

The necessary charge amount calculation section 111 first calculates the difference between the demand scenario and the corresponding power generation scenario, that is, (values of the demand scenario)-(values of the power generation scenario), to obtain a supply and demand. The supply and demand is indicated by a solid line. Here, the difference between the supply and demand and the peak-shaving target value, that is, (values of the supply and demand)-(peak-shaving target values) refers to the peak-shaving discharge amount. The peak-shaving target values are indicated by a dashed-two dotted line.

For example, with respect to the scenario "A", the parts surrounded by respective circles are calculated as the peak-shaving discharge amounts. The peak-shaving discharge amounts are depicted as the bar graphs for respective time periods under the respective supply and demand scenarios.

Further, a necessary discharge amount (necessary charge amount) for each of the time periods can be calculated by accumulating the peak-shaving discharge amounts on and after the time period. For example, the necessary charge amount at 11:00 can be calculated by accumulating the discharge amounts on and after 11:00. The necessary discharge amounts (necessary charge amount) are depicted in the line charts under the respective supply and demand scenarios.

Note that the supply and demand scenario may be generated based on, for example, the forecast using the past record data. Further, for example, one-month average values of the demand in a month corresponding to the execution time periods of the process in FIG. 6 may be used. Further, the characteristics of the day (e.g. Sunday) of the week and the temperatures may be taken into consideration.

Further, the power generation scenarios may be generated by estimating a solar radiation amount and then estimating the photovoltaic power generation amount based on the solar radiation amount. The estimation of the solar radiation amount may be based on the past record data or weather forecast. For example, when the past record data are used, the past weather record data are used to select the record data depending on weather, so that the change of the average solar radiation amount depending on weather is used as the power generation scenario. Otherwise, for example, a possible power generation scenario may be determined by modeling the past record data or modeling the change of the solar radiation amount.

Further, in this embodiment, for explanatory purposes, a case is described where only three supply and demand scenarios are used. Note that, however, for example tens, hundreds, or thousands of supply and demand scenarios may be used.

Next, the necessary charge amount calculation section 111 acquires the necessary charge amount in consideration of the all the supply and demand scenarios (step S102). Specifically, the necessary charge amount calculation section 111 acquires the necessary charge amount in consideration of all the supply and demand scenarios by selecting the maximum value from among the necessary charge amounts calculated based on the respective supply and demand scenarios for each of the time periods.

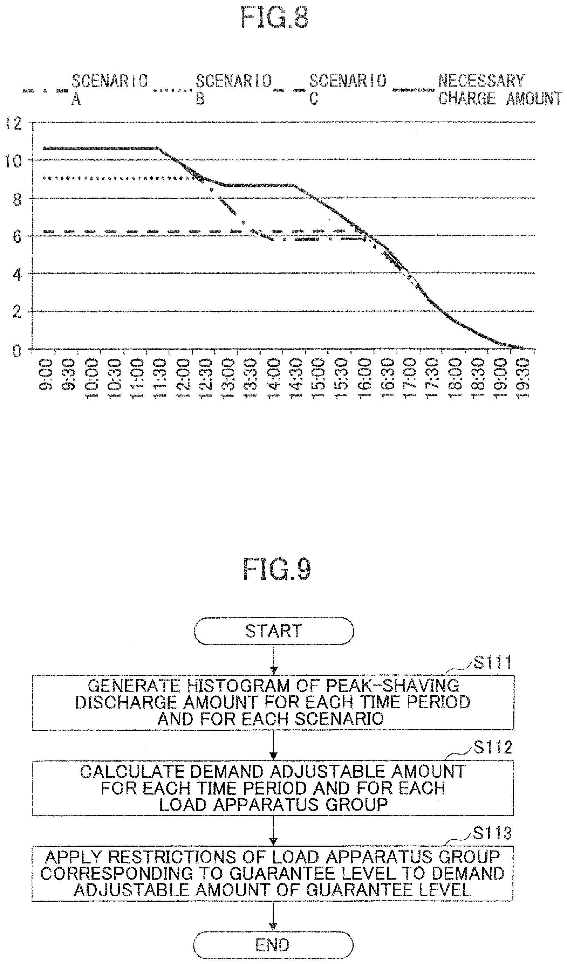

FIG. 8 illustrates an example calculation result of the necessary charge amount in consideration of all the supply and demand scenarios. In FIG. 8, all the necessary charge amounts of the scenarios "A", "B", and "C", which are plotted in the lower part of FIG. 7, are plotted. Further the maximum value of each of the time periods is selected as the necessary charge amount. That is, the term "the necessary charge amount in consideration of all the supply and demand scenarios" refers to the value which indicates the sufficient charge amount to realize (perform) the peak-shaving even when any of the supply and demand scenarios occurs. Further, in the following, note that the term "necessary charge amount" refers to the "necessary charge amount in consideration of all the supply and demand scenarios.

Next, based on the peak-shaving discharge amounts calculated based on the respective supply and demand scenarios and the demand adjustment policy, the demand adjustable amount calculation section 112 performs a process of calculating the demand adjustable amount (step S103).

Details of the process in step S103 are described. FIG. 9 is an example flowchart of a procedure of the process of calculating the demand adjustable amount.

In step S111, the demand adjustable amount calculation section 112 generates a histogram for each of the time periods with respect to the peak-shaving discharge amounts (FIG. 7) calculated on a supply and demand scenario basis.

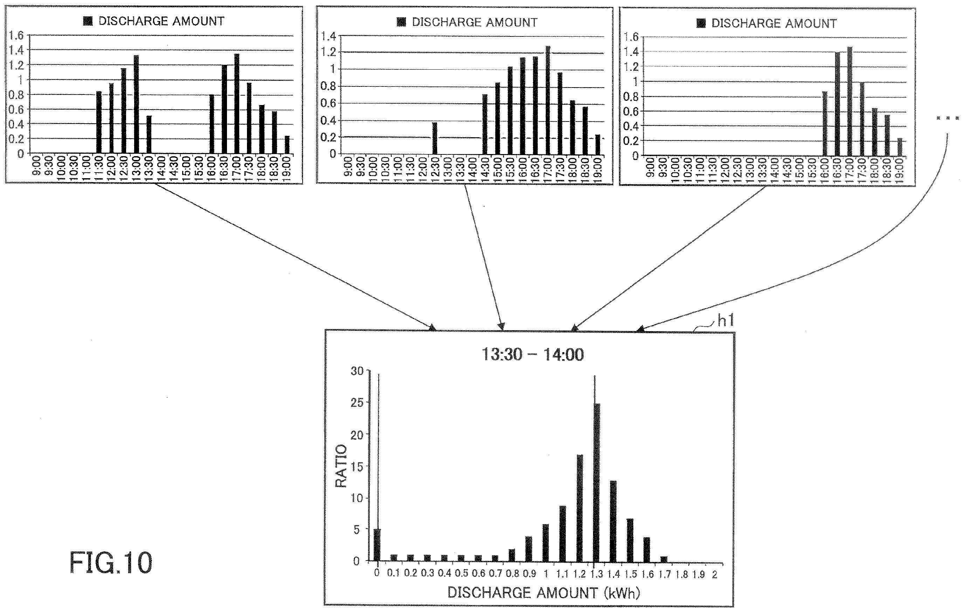

FIG. 10 illustrates an example histogram of a certain time period with respect to the peak-shaving discharge amount of the respective supply and demand scenarios. In the upper part of FIG. 10, three bar graphs are formed by extracting the calculation results of the peak-shaving discharge amounts of the respective time periods on a supply and demand scenario basis in the lower part of FIG. 7. Further, the histogram "h1" is the histogram of the peak-shaving discharge amount in the time period from 13:30 to 14:00 formed by sampling the above calculation results. In FIG. 10, for explanatory purposes, it is assumed that there exist more than three samples. Further, the horizontal axis and the vertical axis of the histogram "h1" denote the peak-shaving discharge amount and the ratio, respectively.

FIG. 10 illustrates only one histogram. Note that, however, such histogram is generated for each of the time periods. That is, for each of the time periods, a distribution of the peak-shaving discharge amounts can be recognized for each of the supply and demand scenarios. Further, in this embodiment, one time period corresponds to thirty minutes. Therefore, 48 histograms are generated.

Next, based on the histograms of the respective time periods, the demand adjustable amount calculation section 112 calculates the demand adjustable amount for each of the time periods on a load apparatus group basis (step S112). Here, the term "load apparatus group" refers to a set of one or more load apparatuses 40 which is a target of the same (similar) demand adjustment at the same time. The demand adjustable amount corresponding to each of the load apparatuses 40 is calculated based on a guarantee level set based on the demand adjustment policy.

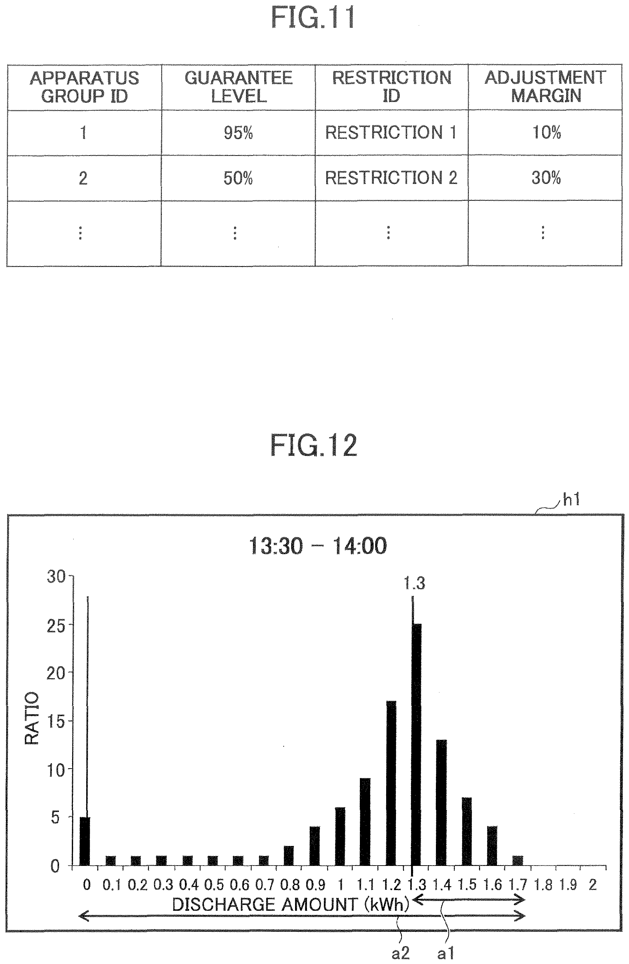

FIG. 11 illustrates an example configuration of the demand adjustment policy. In FIG. 11, the demand adjustment policy includes a guarantee level, a restriction ID, and an adjustment margin for each of apparatus group IDs. The apparatus group ID is the identification information for each of the load apparatus groups. The guarantee level refers to the expected success probability of a demand adjustment when the demand adjustment is performed on the load apparatus group. The success of the demand adjustment refers to the state where the power amount for the demand adjustment can be reduced from the peak-shaving discharge amount. In this embodiment, a 95% guarantee level where the demand adjustment is intended to be surely carried out and a 50% guarantee level where the demand adjustment is intended to be carried out so as to alleviate the inconvenience experienced by a user are set. In other words, the load apparatus group to which the 95% guarantee level is set refers to the load apparatus group where the inconvenience experienced by a user is relatively large when the demand adjustment is executed. On the other hand, the load apparatus group to which the 50% guarantee level is set refers to the load apparatus group where the inconvenience experienced by a user is relatively small when the demand adjustment is executed.

The restriction ID refers to the identification information of the data which indicates the restriction in the demand adjustment with respect to the load apparatus group (hereinafter referred to as "restriction data"). For example, the adjustable range and the time period with respect to the power demand may differ depending on the load apparatus groups. The restriction data includes such restrictions. Further, the entity of the restriction data is stored in, for example, the demand adjustment policy storage section 15.

In step S112, the demand adjustment policy stored in the demand adjustment policy storage section 15 is referred to, and with respect for each of the load apparatus groups corresponding to the apparatus group IDs included in the demand adjustment policy, the demand adjustable amounts of the time periods are calculated for each of the guarantee levels corresponding to the load apparatus groups.

FIG. 12 illustrates an example method of calculating the demand adjustable amount. In FIG. 12, based on the histogram of FIG. 10, with respect to the time period 13:30 to 14:00, examples of the demand adjustable amounts corresponding to 50% and 95% guarantee levels are described.

In this embodiment, for each of the guarantee levels, the demand adjustable amount to secure the guarantee level is calculated. The securing the guarantee level is estimated based on the supply and demand scenarios. That is, from among all the supply and demand scenarios, the demand adjustable amount by which the demand adjustment can succeed with respect to the 50% supply and demand scenario is calculated as the demand adjustable amount which can secure the 50% guarantee level. In the same manner, from among all the supply and demand scenarios, the demand adjustable amount by which the demand adjustment can succeed with respect to the 95% supply and demand scenario is calculated as the demand adjustable amount which can secure the 95% guarantee level.

In FIG. 12, the range "a1" refers to a range whose lower limit corresponds to the maximum value of the peak-shaving discharge amount from among the peak-shaving discharge amounts, a ratio of each of the peak-shaving discharge amounts being determined as a sum of the ratios of all the peak-shaving discharge amounts greater than or equal to each of the peak-shaving discharge amounts being greater than or equal to 50%. Here, the lower limit of the range "a1" is 1.3 kWh. That is, in the time period from 13:30 to 14:00, the ratio of the supply and demand scenario where the peak-shaving discharge amount is greater than or equal to 1.3 kWh is 50% or more.

An object of the demand adjustment is to reduce the peak-shaving discharge amount. Thus, in order for the demand adjustment to succeed, it is desired that the peak-shaving discharge amount is greater than or equal to a demand adjustment amount by the demand adjustment. In other words, with respect to the time period from 13:30 to 14:00, when the demand adjustment amount is 1.3 kWh, the demand adjustment can succeed with the 50% scenario. That is, with respect to the time period from 13:30 to 14:00, the demand adjustable amount which can secure the 50% guarantee level is 1.3 kWh. Here, the "demand adjustment amount" refers to a power amount to be reduced by the demand adjustment to be supplied to (or to be consumed by) the load apparatus 40.

Similarly, the range "a2" refers to a range whose lower limit corresponds to the maximum value of the peak-shaving discharge amount from among the peak-shaving discharge amounts, a ratio of each of the peak-shaving discharge amounts being determined as a sum of the ratios of all the peak-shaving discharge amounts greater than or equal to each of the peak-shaving discharge amounts being greater than or equal to 95%. Here, the lower limit of the range "a2" is 0 kWh. Therefore, in the time period from 13:30 to 14:00, the demand adjustable amount corresponding to the 95% guarantee level is 0 kWh. In other words, in the time period from 13:30 to 14:00, there is no demand adjustable amount so that the demand adjustment can succeed in the 95% supply and demand scenario. This is because, in the time period from 13:30 to 14:00, the ratio of the supply and demand scenario where the peak-shaving discharge amount is zero exceeds 5% of all the supply and demand scenarios.

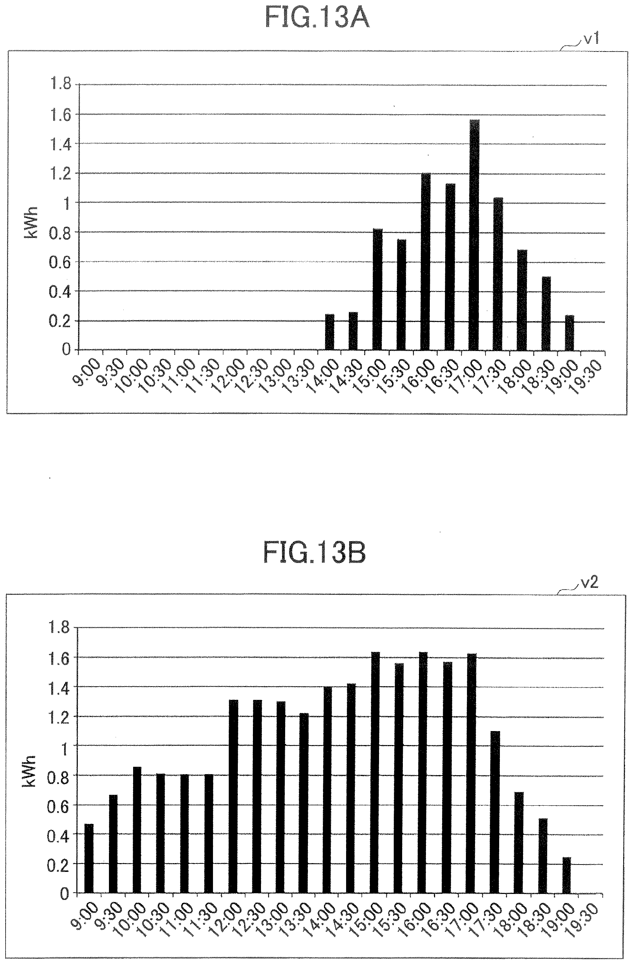

In the above description, the calculation of the demand adjustable amount with respect to one time period is described. Note that the process described with reference to FIG. 12 is executed for each of the time periods. As a result, for example, the data of FIGS. 13A and 13B can be obtained.

FIGS. 13A and 13B illustrate examples of the calculation results of the demand adjustable amounts of the time periods. In FIG. 13A, a graph "v1" illustrates the demand adjustment amounts of the time periods corresponding to the load apparatus group whose apparatus group ID is "1" (i.e., corresponding to the 95% guarantee level). In FIG. 13B, a graph "v2" illustrates the demand adjustment amounts of the time periods corresponding to the load apparatus group whose apparatus group ID is "2" (i.e., corresponding to the 50% guarantee level).

Further, in the calculation of the demand adjustable amount, for example, statistical processing such as a bootstrap technique may be used.

In this embodiment, the guarantee level is set to each of the load apparatus groups. This is because, for example, it becomes possible to alleviate the inconvenience experienced by a user due to the demand adjustment. In this regard, it is desired that a relatively lower guarantee level (e.g., 50% guarantee level in this embodiment) is set to a load apparatus group which can relatively easily be targeted to be demand adjusted. The "load apparatus group which can relatively easily be targeted to be demand adjusted" refers to, for example, the load apparatus group whose degree of the inconvenience experienced by a user is relatively low even when the load apparatus group is set to be targeted to be demand adjusted. With respect to the load apparatus group to which the 50% guarantee level is set, insufficient charge amount may be expected. This is because such load apparatus group is likely to be targeted to be demand adjusted even when it is not an imminent danger situation. In this situation, however, it is not requested to ensure that the demand adjustment can succeed. Therefore, 50% success probability is enough.

On the other hand, it is preferable that a relatively higher guarantee level (e.g., 95% guarantee level in this embodiment) is set to a load apparatus group which can be targeted to be demand adjusted only if it is unavoidable and the inconvenience experienced by a user is large if the load apparatus group is demand adjusted. This is because, for example, the load apparatus group, to which the 95% guarantee level is set, is targeted to be demand adjusted in a case where it is desired to resolve the insufficient charge amount with higher probability.

Note that the number of the guarantee levels may be three or more.

Next, the demand adjustable amount calculation section 112 applies the restriction, which is indicated by the restriction data related to the load apparatus group corresponding to the guarantee level, to the demand adjustable amounts of the time periods for each of the guarantee levels (step S113).

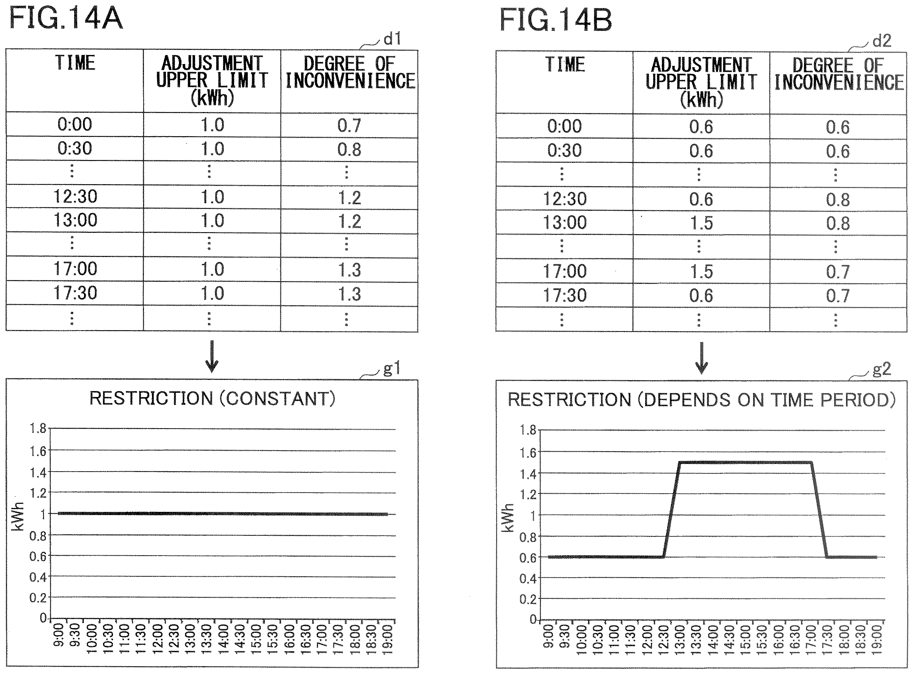

FIGS. 14A and 14B illustrate examples of the restriction data. In FIG. 14A, the restriction data "d1" corresponds to a case where the restriction ID "restriction 1" in FIG. 11. In FIG. 14B, the restriction data "d2" corresponds to a case where the restriction ID "restriction 2" in FIG. 11.

Each of the restriction data includes an adjustment upper limit, an inconvenience level, etc., for each start time of the time periods. The "adjustment upper limit" refers to the upper limit value of the demand adjustment amount corresponding to the time period. The "inconvenience level" refers to the degree of the inconvenience experienced by a user when the demand adjustment is performed on the load apparatus group.

As illustrated in graph "g1", the adjustment upper limit of the restriction data "d1" is constant at 1.0 kWh. On the other hand, as illustrated in graph "g2", the adjustment upper limit of the restriction data "d2" varies depending on the time periods. Further, in step S113, the restriction, which is applied to the demand adjustable amount, refers to the adjustment upper limit.

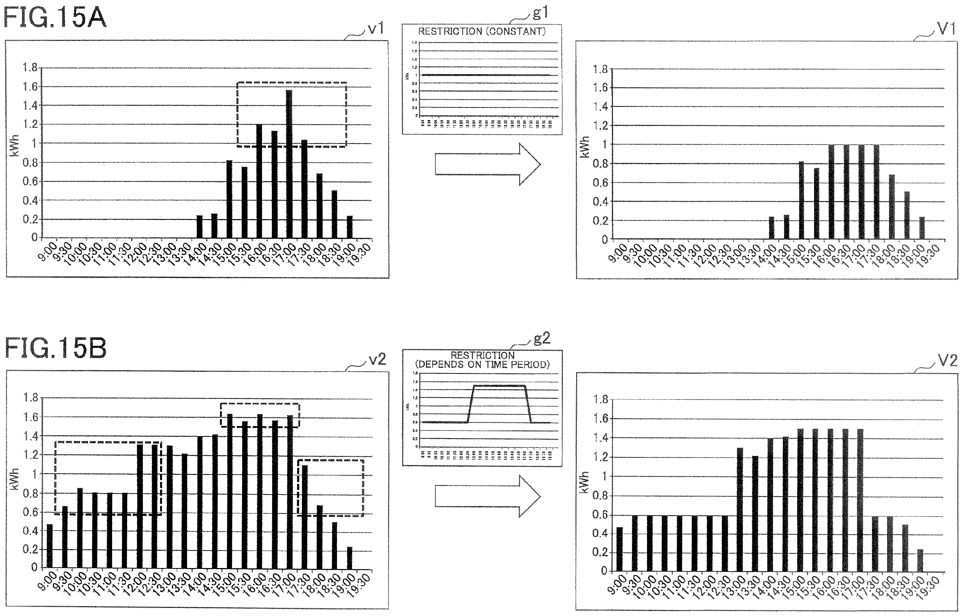

FIGS. 15A and 15B illustrate example results when restrictions are applied to the respective demand adjustable amounts. More specifically, FIG. 15A illustrates an example where the restriction data "d1" as illustrated by graph "g1"(FIG. 14A) is applied to graph "v1" as illustrated in FIG. 13A to acquire graph "V1". Further, FIG. 15B illustrates an example where the restriction data "d2" as illustrated by graph "g2"(FIG. 14B) is applied to graph "v2" as illustrated in FIG. 13B to acquire graph "V2".

In the case of FIG. 15A, a result, which is acquired by cutting (removing) the part of the demand adjustable amount of graph "v1" which exceeds the adjustment upper limit of the restriction data "d1" (the part surrounded by dotted rectangle), is obtained as the demand adjustable amount in graph "V1". Similarly, in the case of FIG. 15B, a result, which is acquired by cutting (removing) the part of the demand adjustable amount of graph "v2" which exceeds the adjustment upper limit of the restriction data "d2" (the part surrounded by dotted rectangle), is obtained as the demand adjustable amount in graph "V2".

In the following, the term "demand adjustable amount" refers to the demand adjustable amount which is formed by applying the adjustment upper limit.

Next, in the operation plan generation process, the procedure is described which is executed by the demand adjustment condition calculation section 113 based on the necessary charge amount which is calculated by the necessary charge amount calculation section 111 (FIG. 8) and the demand adjustable amount which is calculated by the demand adjustable amount calculation section 112 (FIGS. 15A and 15B).

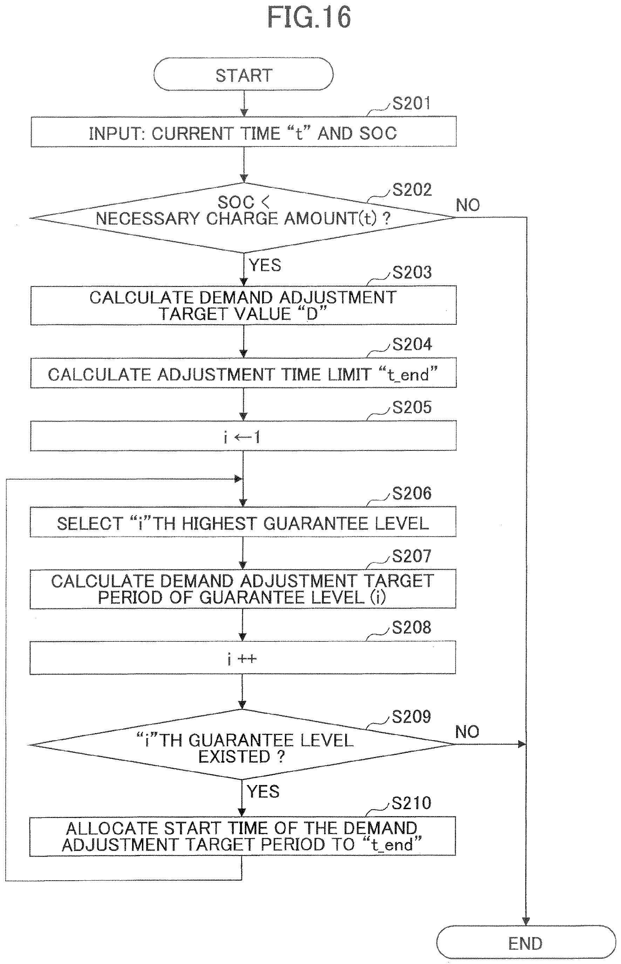

FIG. 16 is an example flowchart of the procedure executed by the demand adjustment condition calculation section 113 in the operation plan generation process.

In step S201, the demand adjustment condition calculation section 113 inputs current time "t" and current charge amount "SOC". The current time "t" refers to the current time at the timing when the process in step S12 of FIG. 5 is determined as YES. The "SOC" refers to, for example, the charge amount acquired from the rechargeable battery 30 via the rechargeable battery control section 12 at the timing of step S201.

Next, the demand adjustment condition calculation section 113 compares the "SOC" with the necessary charge amount (t) at the current time "t" (step S202). The "necessary charge amount (t)" refers to the value of the necessary charge amount in FIG. 8 corresponding to the current time "t". When it is determined that the "SOC" is greater than or equal to the "necessary charge amount (t)" (NO in step S202), the process performed by the demand adjustment condition calculation section 113 in this generation timing of the operation plan is terminated. When determining that the "SOC" is less than the "necessary charge amount (t)" (YES in step S202), the demand adjustment condition calculation section 113 calculate a demand adjustment target value "D" which refers to the power amount to be compensated for by the demand adjustment (step S203). The demand adjustment target value "D" is calculated based in the following Formula (1).

$$\text{Demand adjustment target value ``D''} = (\text{necessary charge amount (t)}) - (\text{SOC}) \qquad \dots \text{Formula (1)}$$

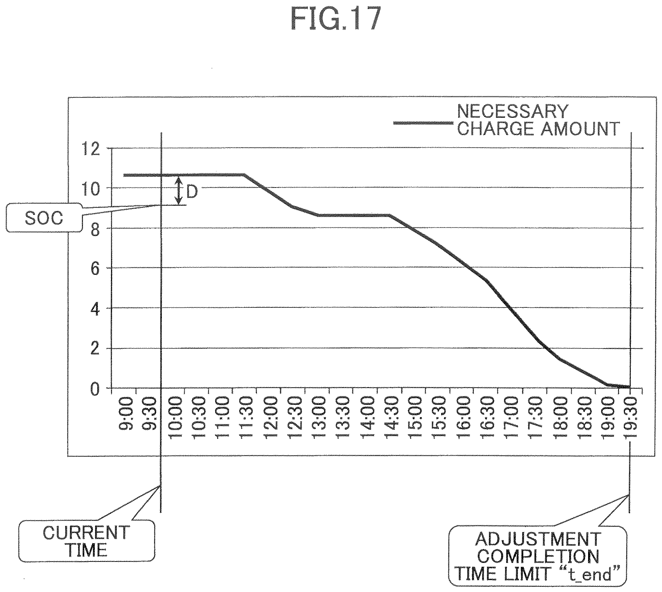

The demand adjustment target value "D" can be illustrated in a figure as illustrated in FIG. 17. FIG. 17 illustrates a parameter to be used by the demand adjustment condition calculation section 113. FIG. 17 illustrates the demand adjustment target value "D" in a case where the current time is 10:00.

Next, the demand adjustment condition calculation section 113 calculates the time limit by when the demand adjustment is to be completed, and assigns the calculation result ("time limit") to a variable "t_end" (step S204). The demand adjustment is performed to reduce the peak-shaving discharge amount. Thus, the demand adjustment can be performed while the charge amount remains. Therefore, the time when the necessary charge amount becomes zero is assigned to the variable "t_end". In FIG. 17, the "t_end" is illustrated. Further, by setting a late time as much as possible to the "t_end" which is the time when the necessary charge amount becomes zero, it becomes possible to delay the timing when the demand adjustment is performed accordingly.

Next, the demand adjustment condition calculation section 113 assigns "1" to a variable "i" (step S205). The variable "1" is used to identify the guarantee level to be processed. Next, the demand adjustment condition calculation section 113 selects the "i"th highest guarantee level (hereinafter "guarantee level (i)") as the target to be processed (step S206). The "i"th highest guarantee level is identified by, for example, referring to the demand adjustment policy (FIG. 11). According to FIG. 11, the first highest guarantee level is the 95% guarantee level. Therefore, in this embodiment, when "i" is 1, the 95% guarantee level is selected.

Next, with respect to the "i"th highest guarantee level, the demand adjustment condition calculation section 113 calculates the demand adjustment target period (step S207). The demand adjustment target period can be acquired by accumulating the demand adjustable amounts of the time periods from the "t_end" in the time reverse direction until the accumulated value exceeds the demand adjustment target value "D". In this case, note that an adjustment margin, which is set to the demand adjustment policy, is used for the load apparatus group corresponding to the guarantee level (i). Therefore, strictly, the demand adjustable amounts in the time period are accumulated until the following Formula (2) is satisfied.

$$\Sigma DR(T) > D \times (1+\alpha) \qquad ...\text{Formula (2)}$$

Where DR(T): demand adjustable amount in time period "T";

$\alpha$: adjustment margin

That is, the demand adjustable amounts of the time periods are accumulated until the accumulated amount exceeds the (demand adjustment target value "D") $\times$ (1+$\alpha$).

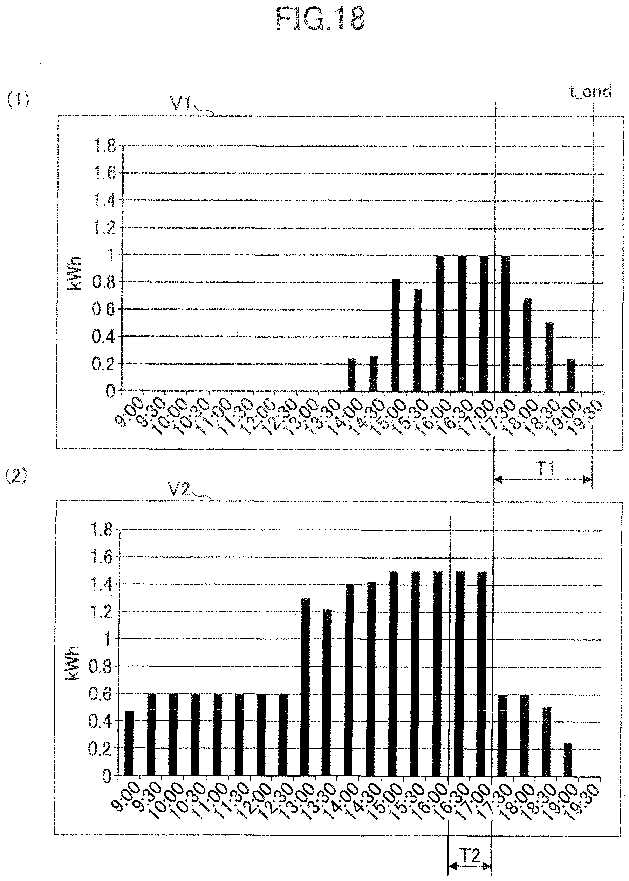

FIG. 18 illustrates an example method of calculating the demand adjustment target period. More specifically, part (1) of FIG. 18 illustrates an example method of calculating the demand adjustment target period corresponding to the 95% guarantee level. Part (1) of FIG. 18 illustrates the case where the accumulation result of the demand adjustable amounts in the period "T1" corresponding to the 95% guarantee level in graph "Vi" exceeds the (demand adjustment target value "D") $\times$ (1+$\alpha$). Therefore, in this case, the period "T1" is determined as the demand adjustment target period relative to the 95% guarantee level. The demand adjustment condition calculation section 113 stores the calculated demand adjustment target period in the memory device 103 in association with, for example, the apparatus group ID corresponding to the guarantee level (i). Further, according to FIG. 11 the adjustment margin corresponding to the 95% guarantee level is 10%. Therefore, the value of "$\alpha$" is 0.1.

Further, in this embodiment, the demand adjustable amounts are accumulated from the "t_end" in the time reverse direction. A reason for this is to delay the time period when the demand adjustment is performed as much as possible. That is, the demand adjustment will cause inconvenience to a user. Therefore, it is preferable that the demand adjustment is not performed as much as possible. Further, in this embodiment, it is determined that the demand adjustment is desired when the SOC is less than the necessary charge amount (t). The necessary charge amount, however, is acquired by selecting the maximum value of all the supply and demand scenarios for each of the time periods as illustrated in FIG. 8. Due to this, even when the SOC is less than the necessary charge amount (t) at the current time "t", there may be a case where the SOC corresponds to a sufficient charge amount. For example, there may be a case where after the current time "t", the weather is recovered so that the power generation amount by the photovoltaic power generation system 60 is increased. Therefore, in this embodiment, the demand adjustment target period is delayed as much as possible, so that it becomes unnecessary to perform the demand adjustment as a result. This is why, in this embodiment, the demand adjustment target period is acquired by accumulating from the "t_end" side in the time reverse direction. By doing this, it becomes possible to reduce the likelihood that the demand adjustment, which was not necessary to perform, is performed.

Next, the demand adjustment condition calculation section 113 adds "1" to the variable "i" (step S208). Then, the demand adjustment condition calculation section 113 determines whether there exists the guarantee level (i) based on the demand adjustment policy (FIG. 11) (step S209).

When it is determined that there exists no guarantee level (i) (NO in step S209), the process of the demand adjustment condition calculation section 113 is terminated. On the other hand, when determining that there exists the guarantee level (i) (YES in step S209), the demand adjustment condition calculation section 113 assigns the start time of the demand adjustment target period, which is calculated with respect to the "i-1"th guarantee level, to the variable "t_end" (step S210). Further, it should be noted that any time other than the start time may be assigned to the "t_end" as long as the assigned time is earlier than the start time.

Next, with respect to the guarantee level (i), the process in step S206 is performed, so that the demand adjustment target period relative to the guarantee level (i) is calculated.

In a case where the "i" is "2", in this embodiment, the process in step S206 with respect to the 50% guarantee level is performed. As a result, the demand adjustment target period as illustrated in part (2) of FIG. 18 is calculated. That is, the demand adjustable amounts are accumulated in the time periods of graph "V2" from the starting time of the demand adjustment target period "T1", which is calculated with respect to the 95% guarantee level, in the time reverse direction until above Formula (2) is satisfied. As a result of the accumulation, the period, in which the time when Formula (2) is satisfied is set as the starting time and the "t_end" is set as the ending time, is determines as the demand adjustment target period "T2" of part (2) of FIG. 18.

As described above, in this embodiment, the demand adjustment is planned (scheduled) so that the demand adjustment corresponding to relatively lower guarantee level is performed earlier. As a result, it becomes possible to alleviate the inconvenience experienced by a user. That is, when the demand adjustment corresponding to relatively lower guarantee level is performed earlier and the demand adjustment succeeds, it becomes possible to increase the likelihood that it is no longer necessary to perform the demand adjustment corresponding to a relatively higher guarantee level.

Next, an example procedure is described which is executed by the operation plan generation section 114 based on the demand adjustment target periods of the respective guarantee levels (load apparatus groups) calculated by the demand adjustment condition calculation section 113.

The operation plan generation section 114 generates the operation plan of the load apparatus 40 based on the demand adjustment target value "D" and the demand adjustable amounts so as to alleviate the inconvenience experienced by a user. The "operation plan of the load apparatus 40" refers to the plan which describes, for example, which level (amount) of the demand adjustment is performed on which load apparatus 40 in which time periods.

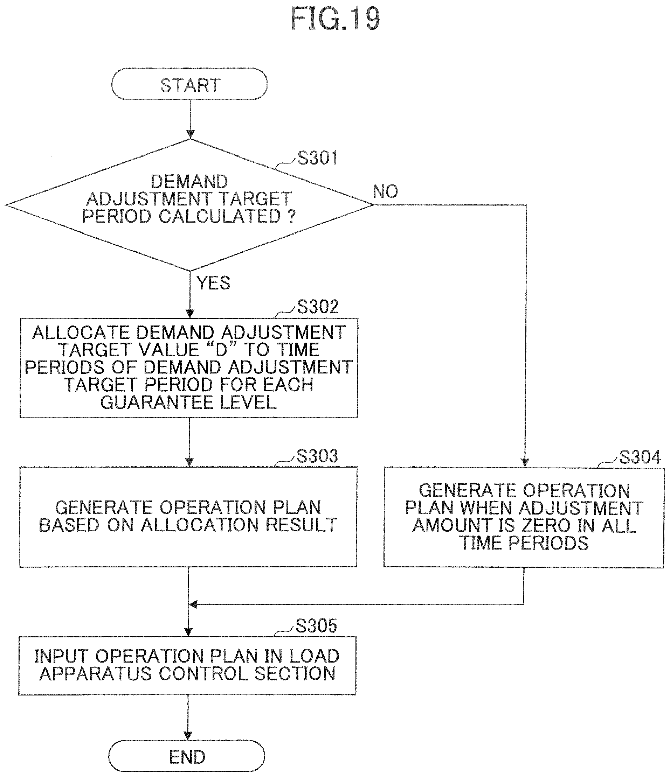

FIG. 19 is an example flowchart of a procedure performed by the operation plan generation section 114 in the operation plan generation process.

In step S301, the operation plan generation section 114 determines whether the demand adjustment target period is calculated by the demand adjustment condition calculation section 113. This determination may be made by determining whether the demand adjustment target period is stored in the memory device 103. Further, this determination corresponds to the determination whether the demand adjustment is desired. That is, when it is determined as YES in step S202 of FIG. 16, it is determined as YES in step S301. On the other hand, when it is determined as NO in step S202 of FIG. 16, it is determined as NO in step S301.

When the demand adjustment target period is calculated (YES in step S301), the operation plan generation section 114 distributes the demand adjustment target value "D" in the time periods in the demand adjustment target period for each of the guarantee levels corresponding to the calculated demand adjustment target periods. The distributed results are allocated to the respective time periods as the demand adjustment amounts. For example, the operation plan generation section 114 determines (calculates) optimal demand adjustment amounts for the time periods for each of the demand adjustment target periods "T1" and "T2" acquired for the respective guarantee levels.

That is, when the demand adjustment target period is acquired, the adjustment margin is set. Due to this, the demand adjustment amounts included in each of the demand adjustment target periods are greater than the demand adjustment target value "D". Therefore, there exists a degree of freedom corresponding to the adjustment margin in the allocation of the demand adjustment amount, which is to be actually applied to the load apparatus 40, to the time periods. Therefore, the operation plan generation section 114 allocates the demand adjustment target value "D" to the time periods so as to alleviate the inconvenience experienced by a user by the demand adjustment.

In distributing the demand adjustment target value "D", the restriction condition is given by the following Formula (3).

$$\Sigma \Delta D(t) \geqq D \qquad \ldots \text{Formula (3)}$$

Here, "D" denotes the demand adjustment target value "D", and "$\Sigma \Delta D(t)$" denotes the sum of the demand adjustment amounts allocated to the time periods in the demand adjustment target period. That is the "$\Delta D(t)$" denotes the demand adjustment amount allocated to the time period "t" (or time "t"). Further, the "$\Delta D(t)$" is less than or equal to the demand adjustable amount in the time period "t". Note that, however, it is allowed that the demand adjustment amount is greater than or equal to the demand adjustable amount by the restriction based on, for example, the specification of the load apparatus 40. Such restriction includes, for example, a case where the demand adjustment amount cannot be set to be equal to the demand adjustable amount due to the restriction of the minimum unit of the adjustable consumption power.

The optimal distribution of the demand adjustment target value "D" may be determined by resolving the optimization problem by using the following Formula (4) as the evaluation function under the restriction condition of Formula (3). That is, in this embodiment, the "optimal" refers to the optimal based on the evaluation function

$$\mathrm{Minimize}(\Sigma(w_{it} \times \Delta d_{it})) \qquad \ldots \mathrm{Formula\ (4)}$$

Where "Minimize(x)" denotes the function to minimize the value of "x"; "$w_{it}$" denotes a degree of inconvenience relative to the load apparatus group "i" in the time period "t"; and "$\Delta d_{it}$" denotes the demand adjustment amount relative to the load apparatus group "i" in the time period "t". Further, the load apparatus group "i" corresponds to the guarantee level focused in the distribution of the demand adjustment amounts. The "$w_{it}$" can be acquired from the restriction data (FIGS. 14A and 14B) relative to the load apparatus group "i".

That is, Formula (4) acquires the distribution (i.e., the value of each $\Delta d_{it}$) of the demand adjustment target value "D" in a manner such that the inconvenience experienced by a user can be minimized by obtaining a weighted sum of the demand adjustment amounts in the time periods as the inconvenience, the weighted sum being acquired by using the degree of the inconvenience of the load apparatus group "i" in the time periods as the weighting. Further, the optimization problem related to the distribution of the demand adjustment target value "D" may be resolved by using an evaluation function other than Formula (4).

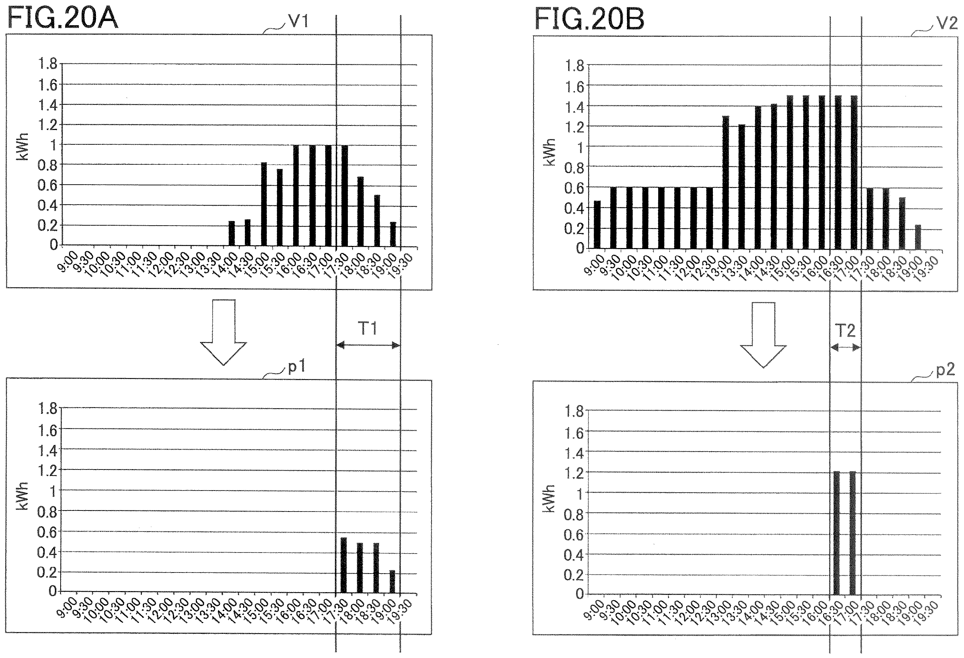

When such optimization is performed on each of the guarantee levels, for example, as illustrated in FIGS. 20A and 20B, the demand adjustment amounts allocated to the respective time periods are calculated. In the following, the calculation results of the demand adjustment amounts in the time periods are called a "demand adjustment plan".

FIGS. 20A and 20B illustrate example demand adjustment plans. More specifically, FIG. 20A illustrates a demand adjustment plan "p1" acquired with respect to the demand adjustment target period "T1" based on graph "V1" corresponding to the 95% guarantee level. Further, FIG. 20B illustrates a demand adjustment plan "p2" acquired with respect to the demand adjustment target period "T2" based on graph "V2" corresponding to the 50% guarantee level.

In the demand adjustment plan "p1", the sum of the demand adjustment amount in the demand adjustment target period "T1" is less than the sum of the demand adjustable amount in the demand adjustment target period "T1". Similarly, in the demand adjustment plan "p2", the sum of the demand adjustment amount in the demand adjustment target period "T2" is less than or equal to the sum of the demand adjustable amount in the demand adjustment target period "T2". This is because the demand adjustment amounts are allocated in a manner such that the restriction condition of Formula (3) is satisfied.

Next, the operation plan generation section 114 generates the operation plan of the load apparatus group corresponding to each of the guarantee levels based on the demand adjustment plan (step S303).

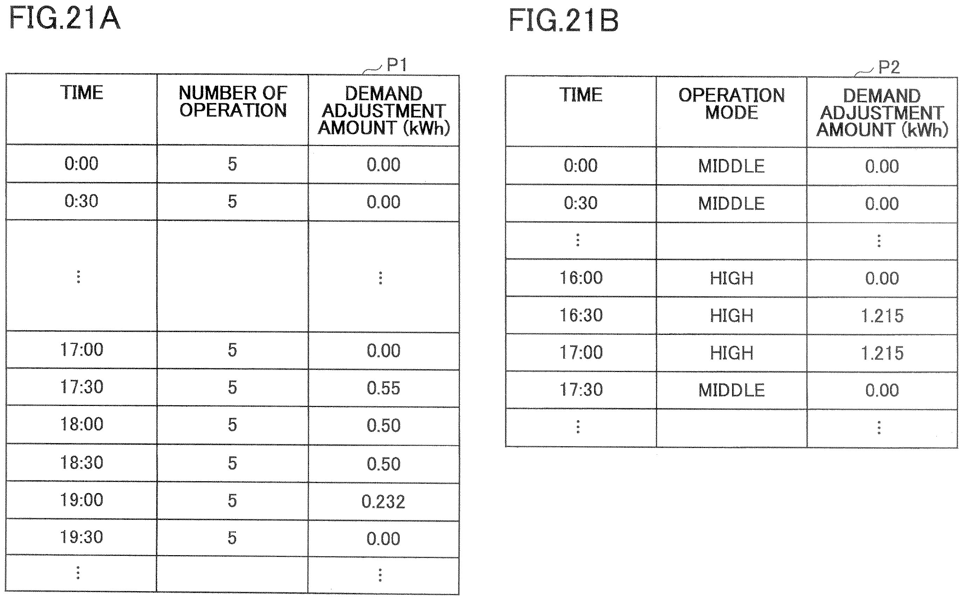

FIGS. 21A and 21B illustrate example operation plans. More specifically, FIG. 21A illustrates an example operation plan "P1" which is generated based on the demand adjustment plan "p1". This operation plan is an example for the load apparatus group including the same type of lighting devices. The "operating number" refers to the number of load apparatus which are to be operated in the time period.

FIG. 21B illustrates an example operation plan "P2" which is generated based on the demand adjustment plan "p2". This operation plan is an example for the load apparatuses such as air conditioners having some operation modes having different consumption power from each other. The operation plan "P1" is the operation plan for the load apparatus group corresponding to the 95% guarantee level, and operation plan "P2" is the operation plan for the load apparatus group corresponding to the 50% guarantee level.

Those operation plans are data including respective demand adjustment amounts allocated to the time periods in the starting time of the time periods. The demand adjustment amounts with respect to the time periods which are not included in the respective demand adjustment target periods are zero.

Further, by generating the demand adjustment plan in which the allocation of the demand adjustment amount is optimized with respect to the guarantee levels, it becomes possible to realize both secure peak-shaving and reduction of the execution of the demand adjustment which makes the inconvenience experienced by a user relatively larger.

Further, in this embodiment, a case is described where the demand adjustment plan is generated so that the demand adjustment target value "D" can be achieved for each of the guarantee levels. Note that, however, the demand adjustment plan for a relatively higher guarantee level is generated so that the peak-shaving can be realized with higher probability. Therefore, the demand adjustment plan for a relatively lower guarantee level may be generated so that, for example, the values less than the demand adjustment target value "D" are distributed in the time periods of the demand adjustment target period by assuming that demand adjustment plan for the relatively higher guarantee level is executed.

On the other hand, in step S301, when the demand adjustment target period is not calculated (NO in step S301), the operation plan generation section 114 generates the operation plan where the demand adjustment amount is zero across the entire time periods for each of the load apparatus groups (step S304). By executing the process of step S304, even when a demand adjustment plan is generated in the previous generation timing of the operation plan so that, based on the demand adjustment plan, an operation plan is generated where a demand adjustment amount greater than zero is set in any of the time periods, it becomes possible to cancel the operation plan.

After step S303 or S304, the operation plan generation section 114 inputs the generated operation plans in the load apparatus control section 13 (step S305).

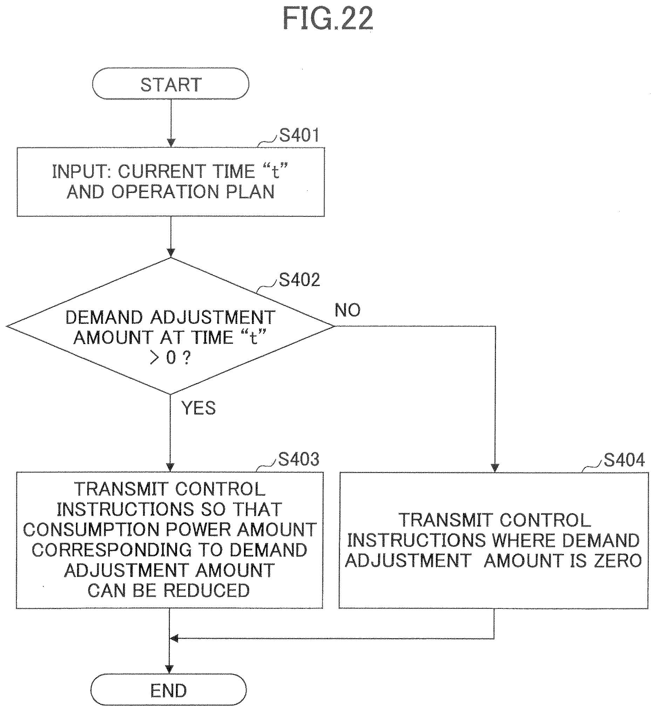

Next, details of the process in step S15 of FIG. 5 are described. FIG. 22 is an example flowchart of the procedure of a load apparatus control process. Here, the control timing comes just before (e.g., several seconds before) the start time of the time periods. Therefore, the process of FIG. 22 is performed just before the start time of the time periods. Further, the process of FIG. 22 is performed on each of the load apparatus groups. In the following, the load apparatus group which is the target of the process of FIG. 22 is called a "target apparatus group".

In step S401, the load apparatus control section 13 receives the input of the current time "t" and the operation plan. Then, the load apparatus control section 13 determines whether the demand adjustment amount at the current time "t" is greater than zero in the operation plan relative to the target apparatus group (step S402). When determining that the demand adjustment amount is greater than zero (YES in step S402), the load apparatus control section 13 generates control instructions relative to each of the load apparatuses 40 belonging to the target apparatus group so that the consumption power amount corresponding to the demand adjustment amount by the target apparatus group is reduced, and transmits the control instructions to the load apparatuses 40 (step S403). For example, in a case where the number of the load apparatuses 40 belonging to the target apparatus group is one, the instructions to reduce the consumption amount corresponding to the demand adjustment amount may be transmitted to the one load apparatus 40. Further, for example, in a case where the load apparatuses 40 are the air conditioners whose consumption power varies depending on the selected operation modes (High, Middle, Low, Stop, etc.), the control instructions may be transmitted to change the selected operation mode by selecting the operation mode to lower the consumption power so that the consumption power corresponding to the demand adjustment amounts can be reduced. Further, in a case where the number of the load apparatuses 40 belonging to the target apparatus group is more than one, the load apparatus control section 13 divides and allocates the demand adjustment amount into and to the load apparatuses 40. Any allocation method may be used. It is not always necessary that the demand adjustment amount is equally allocated. For example, in a case where the load apparatuses 40 are lighting devices which can perform only ON/OFF control, the lighting devices to be switched from ON to OFF may be selected so that the consumption power corresponding to the demand adjustment amount can be reduced, and the control instructions to switch from ON to OFF may be transmitted to the selected lighting devices only.

On the other hand, when the demand adjustment amount of the current time "t" is zero (NO in step S402), the load apparatus control section 13 transmits the control instructions which indicates that the demand adjustment amount is set to zero to each of the load apparatuses 40 belonging to the target apparatus group (step S404).

Further, the association information between the load apparatus groups and the load apparatuses 40 is stored in, for example, the auxiliary memory device 102.

Further, in the above description, a case is described where each of the sections included in the demand adjustment planning section 11 performs real-time processing. Note that, however, the input information such as the peak-shaving target value, the supply and demand scenario, and the demand adjustment policy to be input in the necessary charge amount calculation section 111 and the demand adjustable amount calculation section 112 is given in advance. Therefore, it is not always necessary to periodically execute the processes which are performed by the necessary charge amount calculation section 111 and the demand adjustable amount calculation section 112. For example, those processes may be executed at the timing of step S11 of FIG. 5. Otherwise, those processes may be executed only once while the process of FIG. 5 is performed more than once. Further, for example, the process of FIG. 6 may be executed whenever any of the peak-shaving target value, the supply and demand scenario, and the demand adjustment policy is updated.

Further, when the demand adjustment apparatus 10 is specialized for the real-time processing, the necessary charge amount calculation section 111 and the demand adjustable amount calculation section 112 may be included in an external apparatus which is connected to the demand adjustment apparatus 10 via a network.

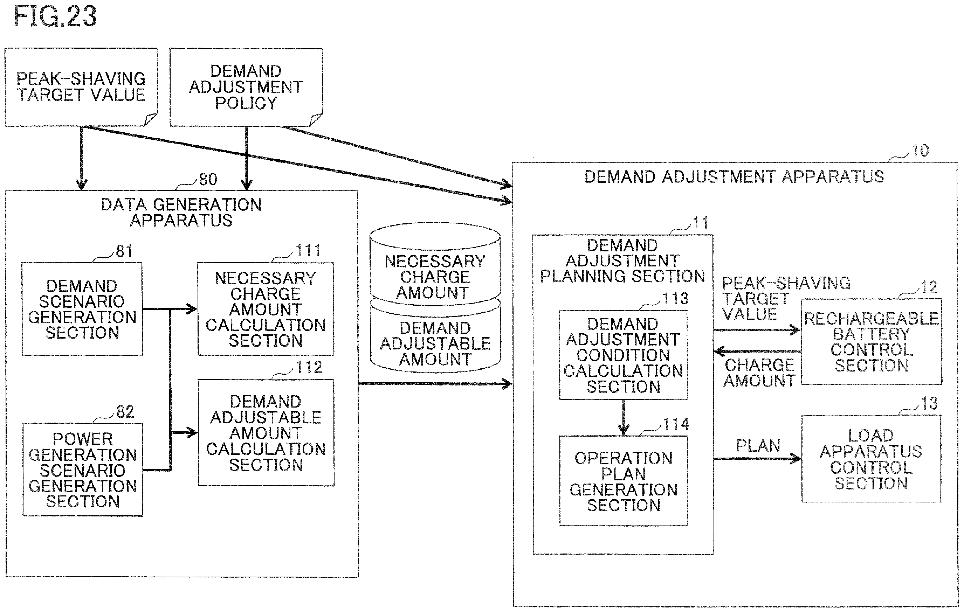

FIG. 23 illustrates an example where an external apparatus includes the necessary charge amount calculation section 111 and the demand adjustable amount calculation section 112. In FIG. 23, the same reference numerals are used to describe the same elements in FIG. 3 or 4, and the repeated descriptions thereof are herein omitted.

In FIG. 23, the demand adjustment planning section 11 does not include the necessary charge amount calculation section 111 and the demand adjustable amount calculation section 112. On the other hand, the a data generation apparatus 80, which includes one or more computers connected to the demand adjustment apparatus 10 via a network, includes the necessary charge amount calculation section 111, the demand adjustable amount calculation section 112, a demand scenario generation section 81, a power generation scenario generation section 82, etc. Those elements are realized by the processes executed by the CPU in the data generation apparatus 80 caused by one or more programs installed in the data generation apparatus 80.

The demand scenario generation section 81 generates the demand scenario which constitutes the supply and demand scenario. The power generation scenario generation section 82 generates the power generation scenario which constitutes the supply and demand scenario.

The necessary charge amount calculation section 111 and the demand adjustable amount calculation section 112 execute the processes of FIG. 6 based on the demand scenario generated by the demand scenario generation section 81 and the power generation scenario generated by the power generation scenario generation section 82. The necessary charge amount and the demand adjustable amount generated by the executing the processes of FIG. 6 are transmitted to the demand adjustment apparatus 10. The demand adjustment planning section 11 of the demand adjustment apparatus 10 executes the processes as described above based on the necessary charge amount and the demand adjustable amount.

As described above, according to this embodiment, it becomes possible for the demand adjustment apparatus 10 to detect the likelihood of the insufficient charge amount based on the necessary charge amount calculated based on the supply and demand scenario and perform the demand adjustment in a planned manner to reduce the peak-shaving discharge amount before it becomes impossible to perform the peak-shaving discharge due to insufficient charge amount. As a result, it becomes possible to perform the demand adjustment so as to alleviate the inconvenience experienced by a user of the load apparatus 40 when compared with the case where power which is supplied to the load apparatus 40 is forcibly cut off in a case of insufficient charge amount.

Further, different guarantee levels can be set to each of the load apparatus groups, and the demand adjustment amounts in the time periods are calculated for each of the guarantee levels. Further, for each of the guarantee levels, the insufficient charge amount (demand adjustment target value "D") is divided into the time periods within a range of the demand adjustable amounts calculated with respect to the guarantee level. In this case, the time periods when the insufficient amount with respect to a lower guarantee level having relatively lower success probability is divided comes earlier than the time periods when the insufficient amount with respect to a higher guarantee level having relatively higher success probability is divided.

As a result, it becomes possible to lower the likelihood that the demand adjustment which cause larger inconvenience is performed.

Further, the plan is generated so that the demand adjustment corresponding to the guarantee levels is performed in a later period as much as possible.

As a result, it becomes possible to realize both secure peak-shaving and reduction of the execution of the demand adjustment which makes the inconvenience experienced by a user relatively larger. That is, not only by reducing the execution of the demand adjustment which is performed on the load apparatus group having a higher guarantee level but whose inconvenience caused by the demand adjustment is relatively large but also by delaying the timing when the demand adjustment having a lower guarantee level but whose inconvenience caused by the demand adjustment is relatively small, it becomes possible to prevent the easy execution of the demand adjustment when a larger necessary charge amount is estimated due to uncertainty of photovoltaic power generation.

Further, the detection of the possibility of the occurrence of the insufficient charge amount is performed based on the necessary charge amount which is largely estimated in consideration of uncertainty of photovoltaic power generation. As a result, it becomes possible to realize a highly secured peak-shaving.

Further, in this embodiment, the demand adjustment apparatus 10 is an example of a demand adjustment plan generation apparatus. The demand adjustment policy storage section 15 is an example of a first memory device. The supply and demand scenario storage section 14 is an example of a second memory device. The demand adjustable amount calculation section 112 is an example of a first calculator. The operation plan generation section 114 is an example of a generator. The necessary charge amount calculation section 111 is an example of a second calculator. The demand adjustment condition calculation section 113 is an example of a third calculator.

**Claims**

1. A demand adjustment plan generation apparatus (10) which is configured to generate an operation plan for a plurality of apparatuses (40) to which power is supplied from a photovoltaic power generator (60) and a rechargeable battery (30) serving as power supply sources of the apparatuses (40), the rechargeable battery (30) being configured to discharge power such that a deficiency of power, which is generated by the photovoltaic power generator (60), relative to a power demand of the apparatuses (40) is maintained to be less than or equal to a predetermined target value, the demand adjustment plan generation apparatus (10) comprising:

   a first memory device (15) configured to store guarantee levels referring to expected success probabilities of power demand adjustments when the power demand adjustments are performed on apparatus groups, each of the apparatus groups including at least one of the apparatuses (40), wherein a success of a power demand adjustment refers to a state where a power amount for the power demand adjustment is reduced from the target value;

a second memory device (14) configured to store a plurality of combinations of time-series power generation amounts generated by the photovoltaic power generator (60) for a predetermined time span and time-series power demand amounts consumed by the apparatuses (40) for the predetermined time span;

a first calculator (112) configured to:

form a distribution of discharge amounts of power, which is supplied from the rechargeable battery (30), calculated for each of the combinations, based on the time-series power generation amounts and the time-series power demand amounts included in the combinations and the target value, the distribution being formed for each of time periods generated by dividing the time span, each of the discharge amounts having a ratio in the distribution, and

select, for each of the success probabilities and for each of the time periods, a maximum discharge amount from among a plurality of discharge amounts in the distribution in each of the time periods, each of the discharge amounts having a value, which is calculated by accumulating the ratios of the discharge amounts greater than or equal to each of the discharge amounts, the value being greater than or equal to each of the success probabilities;

a second calculator (111) configured to:

calculate necessary charge amounts for each of the time periods by accumulating the discharge amounts in and after the time period in consideration of the combinations of time-series power generation amounts and time-series power demand amounts, and

select a maximum value for each time period from among the necessary charge amounts;

a third calculator (113) configured to:

calculate a demand adjustment target value (D) as the difference between the maximum necessary charge amount at the current time and a current charge amount of the rechargeable battery (30), and

allocate demand adjustment target periods for each guarantee level, such that the demand adjustment target period for a relatively low success probability is allocated earlier than the demand adjustment target period for a relatively high success probability, wherein the demand adjustment target period for each guarantee level is calculated by accumulating the maximum discharge amount of the time periods from a start time of a demand adjustment target period for a next higher success probability in the time reverse direction until the accumulated value exceeds the demand adjustment target value (D); and

a generator (114) configured to:

allocate the demand adjustment target value (D) to time periods of the demand adjustment target periods for each guarantee level, and

generate the operation plan which includes the demand adjustment target value (D).

2. A method for generating a demand adjustment plan for a plurality of apparatuses (40) to which power is supplied from a photovoltaic power generator (60) and a rechargeable battery (30) serving as power supply sources of the apparatuses (40), the rechargeable battery (30) being configured to discharge power such that a deficiency of power, which is generated by the photovoltaic power generator (60), relative to a power demand of the apparatuses (40) is maintained to be less than or equal to a predetermined target value, the method causing a computer to execute a process for:

referring to first memory device (15) and second memory device (14), the first memory device (15) being configured to store guarantee levels referring to expected success probabilities of power demand adjustments when the power adjustment demands are performed on apparatus groups, each of the apparatus groups including at least one of the apparatuses (40), wherein a success of a power demand adjustment refers to a state where a power amount for the power demand is reduced from the target value, and the second memory device (14) being configured to store a plurality of combinations of time-series power generation amounts generated by the photovoltaic power generator (60) for a predetermined time span and time-series power demand amounts consumed by the apparatuses (40) for the predetermined time span;

forming a distribution of discharge amounts of power, which is supplied from the rechargeable battery (30), calculated for each of the combinations, based on the time-series power generation amounts and the time-series power demand amounts included in the combinations and the target value, the distribution being formed for each of time periods generated by dividing the time span, each of the discharge amounts having a ratio in the distribution;

selecting, for each of the success probabilities and for each of the time periods, a maximum discharge amount from among a plurality of discharge amounts in the distribution in each of the time periods, each of the plurality of discharge amounts having a value, which is calculated by accumulating the ratios of the discharge amounts greater than or equal to each of the discharge amounts, the value being greater than or equal to each of the success probabilities;

calculating necessary charge amounts for each of the time periods by accumulating the discharge amounts in and after the time period in consideration of the combinations of time-series power generation amounts and time-series power demand amounts;

selecting a maximum value for each time period from among the necessary charge amounts;

calculating a demand adjustment target value (D) as the difference between the maximum necessary charge amount at the current time and a current charge amount of the rechargeable battery (30);

allocating demand adjustment target periods for each guarantee level, such that the demand adjustment target period for a relatively low success probability is allocated earlier than the demand adjustment target period for a relatively high success probability, wherein the demand adjustment target period for each guarantee level is calculated by accumulating the maximum discharge amount of the time periods from a start time of a demand adjustment target period for a next higher success probability in the time reverse direction until the accumulated value exceeds the demand adjustment target value (D);

allocating the demand adjustment target value (D) to time periods of the demand adjustment target periods for each guarantee level; and

generating the operation plan which includes the demand adjustment target value (D) allocated to the time periods as adjustment amounts relative to the power demand.

3. A program for generating a demand adjustment plan for a plurality of apparatuses (40) to which power is supplied from a photovoltaic power generator (60) and a rechargeable battery (30) serving as power supply sources of the apparatuses (40), the rechargeable battery (30) being configured to discharge power such that a deficiency of power, which is generated by the photovoltaic power generator (60), relative to a power demand of the apparatuses (40) is maintained to be less than or equal to a predetermined target value, the program configured to cause a computer to execute the method of claim 2.

**Patentansprüche**

1. Eine Nachfrage-Anpassungs-Plan-Erzeugungs-Vorrichtung (10), welche konfiguriert ist, um

einen Betriebsplan für eine Mehrzahl an Vorrichtungen (40) zu erzeugen, an welche Energie geliefert wird von einem photovoltaischen Stromgenerator (60) und einer wiederaufladbaren Batterie (30), welche als Stromversorgungsquellen der Vorrichtungen (40) dienen, wobei die wiederaufladbare Batterie (30) konfiguriert ist, um Energie derartig abzugeben, dass ein Defizit an von dem photovoltaischen Stromgenerator (60) generierter Energie, relativ zu einer Energienachfrage der Vorrichtungen (40), geringer als oder gleich einem vorbestimmten Zielwert gehalten wird, wobei die Nachfrage-Anpassungs-Plan-Erzeugungs-Vorrichtung (10) umfasst:

ein erstes Speichergerät (15), welches konfiguriert ist, um Garantieniveaus zu speichern, welche sich auf erwartete Erfolgswahrscheinlichkeiten von Nachfrageanpassungen beziehen, wenn die Energie-Nachfrageanpassungen bezüglich Vorrichtungsgruppen durchgeführt werden, wobei eine jede der Vorrichtungsgruppen mindestens eine der Vorrichtungen (40) beinhaltet, wobei ein Erfolg einer Energie-Nachfrageanpassung sich auf einen Zustand bezieht, bei dem eine Energiemenge für die Energie-Nachfrageanpassung von dem Zielwert reduziert wird

ein zweites Speichergerät (14), welches konfiguriert ist, um eine Mehrzahl an Kombinationen von Zeitreihen-Energieerzeugungsmengen, welche durch den photovoltaischen Stromgenerator (60) für eine vorbestimmte Zeitspanne erzeugt werden, und Zeitreihen-Energienachfragemengen, welche durch die Vorrichtungen (40) für die vorbestimmte Zeitspanne verbraucht werden, zu speichern;

ein erster Rechner (112), welcher konfiguriert ist, um:

eine Verteilung von Abführmengen an Energie, welche von der wiederaufladbaren Batterie (30) geliefert wird, zu formen, auf Grundlage der Zeitreihen-Energieerzeugungsmengen und der Zeitreihen-Energienachfragemengen, welche in den Kombinationen einbezogen werden, und des Zielwertes, wobei die Verteilung für eine jede der Zeitperioden geformt wird, welche durch ein Zerteilen der Zeitspanne generiert werden, wobei eine jede der Abführmengen ein Verhältnis in der Verteilung hat, und

eine maximale Abführmenge, für eine jede der Erfolgswahrscheinlichkeiten und für eine jede der Zeitperioden, aus einer Mehrzahl an Abführmengen in der Verteilung in einer jeden der Zeitperioden auszuwählen, wobei eine jede der Abführmengen einen Wert hat, welcher durch Ansammeln der Verhältnisse der Abführmengen, welche größer als oder gleich eine jede der Abführmengen sind, berechnet wird, wobei der Wert größer als oder gleich eine jede der Erfolgswahrscheinlichkeiten ist;

einen zweiten Rechner (111), welcher konfiguriert ist, um:

notwendige Ladungsmengen für eine jede der Zeitperioden durch Ansammeln der Abführmengen in und nach der Zeitperiode, unter Berücksichtigung der Kombinationen von Zeitreihen-Energieerzeugungsmengen und Zeitreihen-Energienachfragemengen, zu berechnen, und
einen maximalen Wert für eine jede Zeitperiode aus den notwendigen Ladungsmengen auszuwählen;

einen dritten Rechner (113), welcher konfiguriert ist, um:

einen Nachfrage-Anpassungs-Zielwert (D) als die Differenz zwischen der maximalen notwendigen Ladungsmenge zur gegenwärtigen Zeit und einer gegenwärtigen Ladungsmenge der wiederaufladbaren Batterie (30) zu berechnen, und
Nachfrage-Anpassungs-Zielperioden für ein jedes Garantieniveau zuzuweisen, so, dass eine Nachfrage-Anpassungs-Zielperiode für eine relativ niedrige Erfolgswahrscheinlichkeit früherer zugewiesen wird als die Nachfrage-Anpassungs-Zielperiode für eine relativ hohe Erfolgswahrscheinlichkeit, wobei die Nachfrage-Anpassungs-Zielperiode für ein jedes Garantieniveau berechnet wird durch Ansammeln der maximalen Abführmenge der Zeitperioden von einer Startzeit einer Nachfrage-Anpassungs-Zielperiode für eine nächsthöhere Erfolgswahrscheinlichkeit in umgekehrter Zeitrichtung, bis der angesammelte Wert den Nachfrage-Anpassungs-Zielwert (D) überschreitet; und

einen Erzeuger (114), welcher konfiguriert ist, um:

den Nachfrage-Anpassungs-Zielwert (D) Zeitperioden der Nachfrage-Anpassungs-Zielperioden für ein jedes Garantieniveau zuzuweisen, und
den Betriebsplan, welcher den Nachfrage-Anpassungs-Zielwert (D) beinhaltet, zu erzeugen.

2. Eine Methode zum Erzeugen eines Nachfrage-Anpassungs-Plans für eine Mehrzahl an Vorrichtungen (40), an welche Energie geliefert wird von einem photovoltaischen Stromgenerator (60) und einer wiederaufladbaren Batterie (30), welche als Stromversorgungsquellen der Vorrichtungen (40) dienen, wobei die wiederaufladbare Batterie (30) konfiguriert ist, um Energie derartig abzugeben, dass ein Defizit an von dem photovoltaischen Stromgenerator (60) generierter Energie, relativ zu einer Energienachfrage der Vorrichtungen (40) gewahrt wird, weniger als oder gleich ein vorbestimmter Zielwert zu sein, wobei die Methode verursacht, dass ein Computer einen Prozess ausführt für:

Verweisen auf erstes Speichergerät (15) und zweites Speichergerät (14), wobei das erste Speichergerät (15) konfiguriert ist, um Garantieniveaus zu speichern, welche sich auf erwartete Erfolgswahrscheinlichkeiten von Nachfrageanpassungen beziehen, wenn die Energie-Nachfrageanpassungen bezüglich Vorrichtungsgruppen durchgeführt werden, wobei eine jede der Vorrichtungsgruppen mindestens eine der Vorrichtungen (40) beinhaltet, wobei ein Erfolg einer Energie-Nachfrageanpassung sich auf einen Zustand bezieht, bei dem eine Energiemenge für die Energie-Nachfrageanpassung von dem Zielwert reduziert wird, und das zweite Speichergerät (14) konfiguriert ist, um eine Mehrzahl an Kombinationen von Zeitreihen-Energieerzeugungsmengen, welche durch den photovoltaischen Stromgenerator (60) für eine vorbestimmte Zeitspanne erzeugt werden, und Zeitreihen-Energienachfragemengen, welche durch die Vorrichtungen (40) für die vorbestimmte Zeitspanne verbraucht werden, zu speichern;
Formen einer Verteilung von Abführmengen an Energie, welche von der wiederaufladbaren Batterie (30) geliefert wird, auf Grundlage der Zeitreihen-Energieerzeugungsmengen und der Zeitreihen-Energienachfragemengen, welche in den Kombinationen einbezogen werden, und des Zielwertes, wobei die Verteilung für eine jede der Zeitperioden geformt wird, welche durch ein Zerteilen der Zeitspanne generiert werden, wobei eine jede der Abführmengen ein Verhältnis in der Verteilung hat;

Auswählen einer maximalen Abführmenge, für eine jede der Erfolgswahrscheinlichkeiten und für eine jede der Zeitperioden, aus einer Mehrzahl an Abführmengen in der Verteilung in einer jeden der Zeitperioden, wobei eine jede der Mehrzahl der Abführmengen einen Wert hat, welcher durch Ansammeln der Verhältnisse der Abführmengen, welche größer als oder gleich eine jede der Abführmengen sind, berechnet wird, wobei der Wert größer als oder gleich eine jede der Erfolgswahrscheinlichkeiten ist;

Berechnen notwendiger Ladungsmengen für eine jede der Zeitperioden durch Ansammeln der Abführmengen in und nach der Zeitperiode, unter Berücksichtigung der Kombinationen von Zeitreihen-Energieerzeugungsmengen und Zeitreihen-Energienachfragemengen;

Auswählen eines maximalen Wertes für eine jede Zeitperiode aus den notwendigen Ladungsmengen;

Berechnen eines Nachfrage-Anpassungs-Zielwert (D) als die Differenz zwischen der maximalen notwendigen Ladungsmenge zur gegenwärtigen Zeit und einer gegenwärtigen Ladungsmenge der wiederaufladbaren Batterie (30);

Zuweisen von Nachfrage-Anpassungs-Zielperioden für ein jedes Garantieniveau, so, dass eine Nachfrage-Anpassungs-Zielperiode für eine relativ niedrige Erfolgswahrscheinlichkeit früherer zugewiesen wird als die Nachfrage-Anpassungs-Zielperiode für eine relativ hohe Erfolgswahrscheinlichkeit, wobei die Nachfrage-Anpassungs-Zielperiode für ein jedes Garantieniveau berechnet wird durch Ansammeln der maximalen Abführmenge der Zeitperioden von einer Startzeit einer Nachfrage-Anpassungs-Zielperiode für eine nächsthöhere Erfolgswahrscheinlichkeit in umgekehrter Zeitrichtung, bis der angesammelte Wert den Nachfrage-Anpassungs-Zielwert (D) überschreitet;

Zuweisen des Nachfrage-Anpassungs-Zielwertes (D) an Zeitperioden der Nachfrage-Anpassungs-Zielperioden für ein jedes Garantieniveau; und

Erzeugen des Betriebsplanes, welcher den Nachfrage-Anpassungs-Zielwert (D) beinhaltet, welcher den Zeitperioden als Anpassungsmengen in Bezug zur Energienachfrage zugewiesen ist.

3. Ein Programm zur Erzeugung eines Nachfrage-Anpassungs-Plans für eine Mehrzahl an Vorrichtungen (40), an welche Energie geliefert wird von einem photovoltaischen Stromgenerator (60) und einer wiederaufladbaren Batterie (30), welche als Stromversorgungsquellen der Vorrichtungen (40) dienen, wobei die wiederaufladbare Batterie (30) konfiguriert ist, um Energie derartig abzugeben, dass ein Defizit an von dem photovoltaischen Stromgenerator (60) generierter Energie, relativ zu einer Energienachfrage der Vorrichtungen (40) gewahrt wird, weniger als oder gleich ein vorbestimmter Zielwert zu sein, wobei das Programm konfiguriert ist, um zu verursachen, dass ein Computer die Methode des Anspruches 2 ausführt.

**Revendications**

1. Appareil de génération de plan d'ajustement de besoins (10) qui est configuré pour générer un plan de fonctionnement pour une pluralité d'appareils (40) auxquels une énergie est fournie par un générateur d'énergie photovoltaïque (60) et une batterie rechargeable (30) qui servent de sources d'alimentation en énergie des appareils (40), la batterie rechargeable (30) étant configurée pour décharger de l'énergie de sorte qu'un manque d'énergie, qui est générée par le générateur d'énergie photovoltaïque (60), par rapport à des besoins en énergie des appareils (40), soit maintenu inférieur ou égal à une valeur cible prédéterminée, l'appareil de génération de plan d'ajustement de besoins (10) comprenant :

un premier dispositif de mémoire (15) configuré pour stocker des niveaux de garantie en référence à des probabilités de réussite prévues d'ajustement des besoins en énergie lorsque les ajustements de besoins en énergie sont effectués sur des groupes d'appareils, chacun des groupes d'appareils comprenant au moins l'un des appareils (40), une réussite d'ajustement des besoins en énergie désignant un état dans lequel une quantité d'énergie destinée à l'ajustement de besoins en énergie est réduite par rapport à la valeur cible ;

un second dispositif de mémoire (14) configuré pour stocker une pluralité de combinaisons de quantités de génération d'énergie chronologiques générées par le générateur d'énergie photovoltaïque (60) pendant une durée prédéterminée, et de quantités de besoins en énergie chronologiques consommées par les appareils (40) pendant la durée prédéterminée ;

un premier calculateur (112) configuré pour :

former une répartition des quantités d'énergie à décharger, qui est fournie par la batterie rechargeable (30), calculée pour chacune des combinaisons, sur la base des quantités de génération d'énergie chronologiques et des quantités de besoins en énergie chronologiques incluses dans les combinaisons, et de la valeur cible, la répartition étant formée pour chacune des périodes de temps générées en divisant la durée, chacune des quantités de décharge ayant un rapport au sein de la répartition, et
sélectionner, pour chacune des probabilités de réussite et pour chacune des durées, une quantité de décharge maximale parmi une pluralité de quantités de décharge de la répartition pour chacune des périodes de temps, chacune des quantités de décharge ayant une valeur, qui est calculée en accumulant les rapports des quantités de décharge supérieurs ou identiques à chacune des quantités de décharge, la valeur étant supérieure ou égale à chacune des probabilités de réussite ;

un second calculateur (111) configuré pour :

calculer les quantités de charge nécessaires pour chacune des périodes de temps en accumulant les quantités de décharge pendant et après la période de temps en tenant compte des combinaisons de quantités de génération d'énergie chronologiques et les quantités de besoins en énergie chronologiques, et sélectionner une valeur maximale pour chaque période de temps parmi les quantités de charge nécessaires ;

un troisième calculateur (113) configuré pour :

calculer une valeur cible d'ajustement de besoins (D) comme différence entre la quantité de charge nécessaire maximale au moment actuel et une quantité de charge actuelle de la batterie rechargeable (30), et affecter des périodes cibles d'ajustement de besoins pour chaque niveau de garantie, de sorte que la période cible d'ajustement de besoins pour une probabilité de réussite relativement faible soit affectée avant la période cible d'ajustement de besoins pour une probabilité de réussite relativement élevée, la période cible d'ajustement de besoins pour chaque niveau de garantie étant calculée en accumulant la quantité de décharge maximale des périodes de temps qui vont d'un moment de début d'une période cible d'ajustement de besoins pour une probabilité de réussite suivante plus élevée dans le sens inversement chronologique à un moment auquel la valeur accumulée dépasse la valeur cible d'ajustement de besoins (D) ; et

un générateur (114) configuré pour :

affecter la valeur cible d'ajustement de besoins (D) aux périodes de temps des périodes cibles d'ajustement de besoins pour chaque niveau de garantie, et
générer le plan de fonctionnement qui comprend la valeur cible d'ajustement de besoins (D).

2. Procédé de génération d'un plan d'ajustement de besoins destiné à une pluralité d'appareils (40) auxquels de l'énergie est fournie par un générateur d'énergie photovoltaïque (60) et une batterie rechargeable (30) qui servent de sources d'alimentation en énergie des appareils (40), la batterie rechargeable (30) étant configurée pour décharger de l'énergie de sorte qu'un manque d'énergie, qui est généré par le générateur d'énergie photovoltaïque (60), par rapport à des besoins en énergie des appareils (40), soit maintenu inférieur ou égal à une valeur cible prédéterminée, le procédé permettant à un ordinateur d'exécuter un processus destiné à :

faire référence à un premier dispositif de mémoire (15) et un second dispositif de mémoire (14), le premier dispositif de mémoire (15) étant configuré pour stocker des niveaux de garantie en référence à des probabilités de réussite prévues d'ajustement des besoins en énergie lorsque les ajustements de besoins en énergie sont effectués sur des groupes d'appareils, chacun des groupes d'appareils comprenant au moins l'un des appareils (40), une réussite d'ajustement des besoins en énergie désignant un état dans lequel une quantité d'énergie destinée aux besoins en énergie est réduite par rapport à la valeur cible, et le second dispositif de mémoire (14) étant configuré pour stocker une pluralité de combinaisons de quantités de génération d'énergie chronologiques générées par le générateur d'énergie photovoltaïque (60) pendant une durée prédéterminée, et de quantités de besoins en énergie chronologiques consommées par les appareils (40) pendant la durée prédéterminée ;
la formation d'une répartition des quantités d'énergie à décharger, qui est fournie par la batterie rechargeable (30), calculée pour chacune des combinaisons, sur la base des quantités de génération d'énergie chronologiques et des quantités de besoins en énergie chronologiques incluses dans les combinaisons, et de la valeur cible, la répartition étant formée pour chacune des périodes de temps générées en divisant la durée, chacune des quantités de décharge ayant un rapport au sein de la répartition ;
la sélection, pour chacune des probabilités de réussite et pour chacune des durées, d'une quantité de décharge maximale parmi une pluralité de quantités de décharge de la répartition pour chacune des périodes de temps, chacune des quantités de décharge ayant une valeur, qui est calculée en accumulant les rapports des quantités de décharge supérieurs ou identiques à chacune des quantités de décharge, la valeur étant supérieure ou égale à chacune des probabilités de réussite ;
le calcul des quantités de charge nécessaires pour chacune des périodes de temps en accumulant les quantités de décharge pendant et après la période de temps en tenant compte des combinaisons de quantités de génération d'énergie chronologiques et des quantités de besoins en énergie chronologiques, et
la sélection d'une valeur maximale pour chaque période de temps parmi les quantités de charge nécessaires ;

le calcul d'une valeur cible d'ajustement de besoins (D) comme différence entre la quantité de charge nécessaire maximale au moment actuel et une quantité de charge actuelle de la batterie rechargeable (30) ;
l'affectation de périodes cibles d'ajustement de besoins pour chaque niveau de garantie, de sorte que la période cible d'ajustement des besoins pour une probabilité de réussite relativement faible soit affectée avant la période cible d'ajustement de besoins pour une probabilité de réussite relativement élevée, la période cible d'ajustement de besoins pour chaque niveau de garantie étant calculée en accumulant la quantité de décharge maximale des périodes de temps qui vont d'un moment de début d'une période cible d'ajustement de besoins pour une probabilité de réussite suivante plus élevée dans le sens inversement chronologique à un moment auquel la valeur accumulée dépasse la valeur cible d'ajustement de besoins (D) ;
l'affectation de la valeur cible d'ajustement de besoins (D) aux périodes de temps des périodes cibles d'ajustement de besoins pour chaque niveau de garantie ; et
la génération du plan de fonctionnement qui comprend la valeur cible d'ajustement de besoins (D) affectée aux périodes de temps en guise de quantités d'ajustement par rapport aux besoins en énergie.

3. Programme de génération d'un plan d'ajustement de besoins pour une pluralité d'appareils (40) auxquels une énergie est fournie par un générateur d'énergie photovoltaïque (60) et une batterie rechargeable (30) qui servent de sources d'alimentation en énergie des appareils (40), la batterie rechargeable (30) étant configurée pour décharger de l'énergie de sorte qu'un manque d'énergie, qui est générée par le générateur d'énergie photovoltaïque (60), par rapport à des besoins en énergie des appareils (40), soit maintenu inférieur ou égal à une valeur cible prédéterminée, le programme étant configuré pour permettre à un ordinateur d'exécuter le procédé selon la revendication 2.

# FIG.1

# FIG.2

FIG.3

# FIG.4

DEMAND ADJUSTMENT PLANNING SECTION — 11

- PEAK-SHAVING TARGET VALUE

SUPPLY AND DEMAND SCENARIO STORAGE SECTION — 14

DEMAND ADJUSTMENT POLICY STORAGE SECTION — 15

RECHARGEABLE BATTERY CONTROL SECTION — 12

CHARGE AMOUNT

NECESSARY CHARGE AMOUNT CALCULATION SECTION — 111

DEMAND ADJUSTABLE AMOUNT CALCULATION SECTION — 112

- DEMAND ADJUSTABLE AMOUNT

- NECESSARY CHARGE AMOUNT

DEMAND ADJUSTMENT CONDITION CALCULATION SECTION — 113

- DEMAND ADJUSTMENT TARGET VALUE
- DEMAND ADJUSTMENT TARGET PERIOD

OPERATION PLAN GENERATION SECTION — 114

- OPERATION PLAN

EP 3 007 299 B1

# FIG.5

START

S11
INITIALIZE OPERATION PLAN

S12
PLAN TIMING ?    NO

YES

S13
OPERATION PLAN
GENERATION PROCESS

S14
CONTROL TIMING ?    NO

YES

S15
LOAD APPARATUS
CONTROL PROCESS

S16
NO    OPERATION END ?

YES

END

# FIG.6

START

S101
CALCULATE PEAK-SHAVING TARGET VALUE AND
NECESSARY CHARGE AMOUNT FOR EACH OF SUPPLY AND
DEMAND SCENARIOS AND FOR EACH OF TIME PERIODS

S102
ACQUIRE NECESSARY CHARGE AMOUNT
IN CONSIDERATION OF ALL  SCENARIOS

S103
DEMAND ADJUSTABLE AMOUNT CALCULATION PROCESS

END

FIG.7

# FIG.8

# FIG.9

FIG.10

# FIG.11

| APPARATUS GROUP ID | GUARANTEE LEVEL | RESTRICTION ID | ADJUSTMENT MARGIN |
|---|---|---|---|
| 1 | 95% | RESTRICTION 1 | 10% |
| 2 | 50% | RESTRICTION 2 | 30% |
| ⋮ | ⋮ | ⋮ | ⋮ |

# FIG.12

## FIG.13A

## FIG.13B

# FIG.14A

| TIME | ADJUSTMENT UPPER LIMIT (kWh) | DEGREE OF INCONVENIENCE |
|---|---|---|
| 0:00 | 1.0 | 0.7 |
| 0:30 | 1.0 | 0.8 |
| ⋮ | ⋮ | ⋮ |
| 12:30 | 1.0 | 1.2 |
| 13:00 | 1.0 | 1.2 |
| ⋮ | ⋮ | ⋮ |
| 17:00 | 1.0 | 1.3 |
| 17:30 | 1.0 | 1.3 |
| ⋮ | ⋮ | ⋮ |

d1

↓

g1

**RESTRICTION (CONSTANT)**

# FIG.14B

| TIME | ADJUSTMENT UPPER LIMIT (kWh) | DEGREE OF INCONVENIENCE |
|---|---|---|
| 0:00 | 0.6 | 0.6 |
| 0:30 | 0.6 | 0.6 |
| ⋮ | ⋮ | ⋮ |
| 12:30 | 0.6 | 0.8 |
| 13:00 | 1.5 | 0.8 |
| ⋮ | ⋮ | ⋮ |
| 17:00 | 1.5 | 0.7 |
| 17:30 | 0.6 | 0.7 |
| ⋮ | ⋮ | ⋮ |

d2

↓

g2

**RESTRICTION (DEPENDS ON TIME PERIOD)**

EP 3 007 299 B1

FIG.15A

FIG.15B

31

# FIG.16

```
                    ┌──────────────┐
                    │    START     │
                    └──────┬───────┘
                           │              S201
              ┌────────────▼─────────────────┐
              │  INPUT: CURRENT TIME "t" AND SOC │
              └────────────┬─────────────────┘
                           │                      S202
                      ╱────▼────╲                        NO
                 ╱─────────────────────╲ ───────────────────┐
                ╱      SOC <             ╲                    │
                ╲  NECESSARY CHARGE AMOUNT(t) ?              │
                 ╲─────────────────────╱                    │
                      ╲────┬────╱                            │
                        YES│               S203              │
              ┌────────────▼─────────────────┐              │
              │  CALCULATE DEMAND ADJUSTMENT  │              │
              │      TARGET VALUE "D"         │              │
              └────────────┬─────────────────┘              │
                           │              S204               │
              ┌────────────▼─────────────────┐              │
              │ CALCULATE ADJUSTMENT TIME LIMIT "t_end" │    │
              └────────────┬─────────────────┘              │
                           │              S205               │
              ┌────────────▼─────────────────┐              │
              │           i ← 1              │              │
              └────────────┬─────────────────┘              │
                           │                                 │
        ┌──────────────────┤                                 │
        │                  │              S206               │
        │     ┌────────────▼─────────────────┐              │
        │     │ SELECT "i"TH HIGHEST GUARANTEE LEVEL │       │
        │     └────────────┬─────────────────┘              │
        │                  │              S207               │
        │     ┌────────────▼─────────────────┐              │
        │     │ CALCULATE DEMAND ADJUSTMENT TARGET │        │
        │     │  PERIOD OF GUARANTEE LEVEL (i)     │        │
        │     └────────────┬─────────────────┘              │
        │                  │              S208               │
        │     ┌────────────▼─────────────────┐              │
        │     │           i ++               │              │
        │     └────────────┬─────────────────┘              │
        │                  │              S209               │
        │             ╱────▼────╲                    NO      │
        │        ╱─────────────────────╲ ──────────────────►│
        │       ╱  "i"TH GUARANTEE LEVEL ╲                   │
        │       ╲       EXISTED ?        ╱                   │
        │        ╲─────────────────────╱                    │
        │             ╲────┬────╱                            │
        │               YES│               S210              │
        │     ┌────────────▼─────────────────┐              │
        │     │ ALLOCATE START TIME OF THE DEMAND │          │
        │     │ ADJUSTMENT TARGET PERIOD TO "t_end" │        │
        │     └────────────┬─────────────────┘              │
        └──────────────────┘                                 │
                                                             │
                                              ┌──────────────▼───────┐
                                              │        END           │
                                              └──────────────────────┘
```

# FIG.17

# FIG.18

# FIG.19

START

S301
DEMAND ADJUSTMENT TARGET PERIOD CALCULATED ?

NO

YES

S302
ALLOCATE DEMAND ADJUSTMENT TARGET VALUE "D" TO TIME PERIODS OF DEMAND ADJUSTMENT TARGET PERIOD FOR EACH GUARANTEE LEVEL

S303
GENERATE OPERATION PLAN BASED ON ALLOCATION RESULT

S304
GENERATE OPERATION PLAN WHEN ADJUSTMENT AMOUNT IS ZERO IN ALL TIME PERIODS

S305
INPUT OPERATION PLAN IN LOAD APPARATUS CONTROL SECTION

END

EP 3 007 299 B1

FIG.20A

FIG.20B

36

# FIG.21A

P1

| TIME | NUMBER OF OPERATION | DEMAND ADJUSTMENT AMOUNT (kWh) |
|---|---|---|
| 0:00 | 5 | 0.00 |
| 0:30 | 5 | 0.00 |
| ⋮ | | ⋮ |
| 17:00 | 5 | 0.00 |
| 17:30 | 5 | 0.55 |
| 18:00 | 5 | 0.50 |
| 18:30 | 5 | 0.50 |
| 19:00 | 5 | 0.232 |
| 19:30 | 5 | 0.00 |
| ⋮ | | ⋮ |

# FIG.21B

P2

| TIME | OPERATION MODE | DEMAND ADJUSTMENT AMOUNT (kWh) |
|---|---|---|
| 0:00 | MIDDLE | 0.00 |
| 0:30 | MIDDLE | 0.00 |
| ⋮ | | ⋮ |
| 16:00 | HIGH | 0.00 |
| 16:30 | HIGH | 1.215 |
| 17:00 | HIGH | 1.215 |
| 17:30 | MIDDLE | 0.00 |
| ⋮ | | ⋮ |

EP 3 007 299 B1

# FIG.22

START

S401

INPUT: CURRENT TIME "t"
AND OPERATION PLAN

S402

DEMAND ADJUSTMENT
AMOUNT AT TIME "t"
> 0 ?

NO

YES

S403

TRANSMIT CONTROL
INSTRUCTIONS SO THAT
CONSUMPTION POWER AMOUNT
CORRESPONDING TO DEMAND
ADJUSTMENT AMOUNT
CAN BE REDUCED

S404

TRANSMIT CONTROL
INSTRUCTIONS WHERE DEMAND
ADJUSTMENT AMOUNT IS ZERO

END

# FIG.23

PEAK-SHAVING TARGET VALUE

DEMAND ADJUSTMENT POLICY

80 — DATA GENERATION APPARATUS

- 81 — DEMAND SCENARIO GENERATION SECTION
- 82 — POWER GENERATION SCENARIO GENERATION SECTION
- 111 — NECESSARY CHARGE AMOUNT CALCULATION SECTION
- 112 — DEMAND ADJUSTABLE AMOUNT CALCULATION SECTION

NECESSARY CHARGE AMOUNT

DEMAND ADJUSTABLE AMOUNT

10 — DEMAND ADJUSTMENT APPARATUS

- 11 — DEMAND ADJUSTMENT PLANNING SECTION
  - 113 — DEMAND ADJUSTMENT CONDITION CALCULATION SECTION
  - 114 — OPERATION PLAN GENERATION SECTION

PEAK-SHAVING TARGET VALUE

CHARGE AMOUNT

12 — RECHARGEABLE BATTERY CONTROL SECTION

PLAN

13 — LOAD APPARATUS CONTROL SECTION

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010204833 A
- JP 2008043147 A
- JP 2008141918 A
- JP 2010041802 A
- JP 2001327080 A
- WO 2013136419 A
- US 2014358307 A
- EP 2226754 A
- JP 2009077498 B
- EP 2775430 A
- US 2010292856 A

**Non-patent literature cited in the description**

- **NORIAKI TOKUDA ; MAKOTO RYOJI ; YOSHIAKI KOHASHI.** High-performance photovoltaic generation system having peak-shaving function of receive power with parallel establishment of storage cell. *Working plan of Building,* 2008, 37-41